(19) Europäisches Patentamt European Patent Office Office européen des brevets

(11) **EP 3 837 944 B1**

(12) **EUROPEAN PATENT SPECIFICATION**

(45) Date of publication and mention
of the grant of the patent:
**01.02.2023 Bulletin 2023/05**

(21) Application number: **20213708.9**

(22) Date of filing: **14.12.2020**

(51) International Patent Classification (IPC):
*A01B 79/00* (2006.01)    *A01D 34/00* (2006.01)
*G01J 3/00* (2006.01)    *G01N 21/25* (2006.01)

(52) Cooperative Patent Classification (CPC):
**A01B 79/005; A01D 34/006; G01J 3/027;
G01J 3/0275; G01J 3/0278; G01J 3/0289;
G01J 3/0291; G01N 21/25;** G01N 2021/1797

(54) **LAND MONITORING SYSTEM AND RELATED METHOD**

LAND ÜBERWACHUNGSSYSTEM UND VERFAHREN

SYSTÈME DE SURVEILLANCE DES TERRES ET MÉTHODE CORRESPONDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2019 IT 201900024844**

(43) Date of publication of application:
**23.06.2021 Bulletin 2021/25**

(73) Proprietor: **Stiga S.p.A. in breve anche St. S.p.A.
31033 Castelfranco Veneto (TV) (IT)**

(72) Inventors:
• **BANIN, Fabio
31033 CASTELFRANCO VENETO (TV) (IT)**
• **VALLONE, Varna
I-31033 Castelfranco Veneto (TV) (IT)**
• **BENETTI, Enrico
31033 CASTELFRANCO VENETO (TV) (IT)**
• **LEVER, Nicola
31033 CASTELFRANCO VENETO (TV) (IT)**
• **SCAPIN, Michele
I-36061 Bassano del Grappa (VI) (IT)**
• **ROBINSON, Sean
31033 CASTELFRANCO VENETO (TV) (IT)**

(74) Representative: **PGA S.p.A.
Via Mascheroni, 31
20145 Milano (IT)**

(56) References cited:
WO-A2-2007/050192    RO-A2- 133 457
US-A- 5 771 169    US-B1- 6 845 326
US-B1- 8 412 419

**Description**

FIELD OF THE INVENTION

The present invention relates to a monitoring system of a work area, such as land, turfgrass, gardens or agricultural land. This monitoring system provides for mapping said work area on the basis of a spectral parameter or index representative of the health condition of the soil or turfgrass. The present invention also provides a related method for monitoring the work area.

BACKGROUND

In prior art, systems are known to obtain spectral indices, such as NDVI, NDRE or WBI indices, used for monitoring land, turfgrass or gardens. Sensors are also known to detect spectral parameters on whose basis a control unit is able to obtain the respective spectral indices representative of the health condition of the soil or turfgrass.

However, the Applicant noted that the currently known monitoring systems have disadvantages in the detection of spectral indices related to a work area: such spectral indices are in fact commonly obtained by aerial surveys or by processing a satellite image. This is due to the fact that the entire work area must be contained within the framing of the spectral detector in order to obtain the associated spectral indices: a complete framing of the work area can be obtained, to date, only through aerial views. This limitation entails considerable costs to be incurred for each survey needed by the operator: the operator must in fact take charge of carrying out this aerial survey, providing a drone or aircraft with optical systems suited for the detection of spectral indices. Alternatively, an operator can pay access to satellite maps provided by third parties, which include the information needed to obtain the respective spectral indices, for example the values of the spectral parameters representative of the infrared: however, a satellite image has a limited resolution, which severely affects the quality of the image itself and, consequently, the ability to detect the corresponding spectral parameters useful for verifying the health condition of the work area.

As a result, the current state of the art provides tools for the detection of spectral indices, such as for example NDVI, NDRE or WBI, which have considerable economic and/or qualitative disadvantages.

Document US 6,845,326 B1 discloses an analyzing system for measuring the constituents of an agricultural product in a cultivation. The agricultural product can be grain or wheat and the constituents can be protein, starch, fiber or moisture content. The system includes a device that creates an agricultural product stream. The passing stream is radiated and the radiation passing through the product is received by an optical sensor which converts received radiation is converted into an electrical signal. A computer processes this signal to generate information relating to the content of constituents within the agricultural product. In an embodiment, the constituents data are matched in real time to GPS position data and a map of the cultivation is created according to the distribution of the constituents.

Document WO 2007/050192 A2 discloses a method of partitioning a cultivation into areas with similar attributes, such as protein level, starch level, oil level, sugar content, moisture level and digestible nutrient level. The cultivation is subdivided into zones depending e.g. on the NDVI value. Such a subdivision serves for the subsequent elaboration of a harvesting plan that takes into account the measured attributes. Samples of the agricultural products are then collected by driving a specific vehicle, analyzed with conventional methods and associated to the respective GPS for creating a map of the cultivation according to the measured attributes.

PURPOSE OF THE INVENTION

The objective of the present invention is to solve at least one of the drawbacks and/or limitations of preceding solutions in the technical sector of monitoring systems of spectral parameters.

A first objective is to provide a monitoring system capable of detecting spectral parameters within a work area and obtaining their respective spectral indices, combining high quality in detection and low operating costs.

A further objective is to provide a monitoring system capable of locally detecting the spectral parameters in the vicinity of the ground, so as to increase the quality of detection and the accuracy in obtaining the health condition of each portion of the work area.

A further objective is to provide a virtual map representative of the work area and presenting information about the health condition of each portion of the work area.

A further objective is to provide a monitoring system capable of creating a history of the spectral detections that have been carried out.

A further objective is to provide a monitoring system capable of predicting the evolution of one or more parameters representative of the health condition of the soil.

BRIEF DESCRIPTION OF THE DRAWINGS

Some embodiments and some aspects of the invention will be described hereinafter with reference to the accompanying drawings, provided for indicative purposes only and therefore not limitative, wherein:

- figures 1, 2 and 2a are schematic views of a work area and the corresponding virtual map;
- figure 3 schematically shows a virtual map representative of the work area;
- figure 4 schematically shows an embodiment of the monitoring system integrated, at least partially, in a mobile device;

- figure 4a schematically shows a further embodiment of the monitoring system which can be associated, at least partially, with a mobile device;
- figure 5 shows a representative diagram of the monitoring system according to one embodiment of the present invention;
- figure 6 shows a flowchart comprising sequential operational steps of a land maintenance method not according to a particular embodiment of the present invention;
- figure 7 shows a flowchart comprising sequential operational steps of an inspection method not according to a particular embodiment of the present invention;
- figure 8 shows a flowchart comprising sequential operational steps of a monitoring method not according to a particular embodiment of the present invention.

DEFINITIONS AND CONVENTIONS

It should be noted that in the present detailed description corresponding parts illustrated in the various figures are indicated with the same numerical references. The figures illustrate the object of the invention by means of schematic and not to scale representations.

**Mobile device 2**

The term *"mobile device"* refers to a device for the maintenance of gardens, turfgrass, agricultural lands or crops. Preferably, the mobile device is a self-driving device.

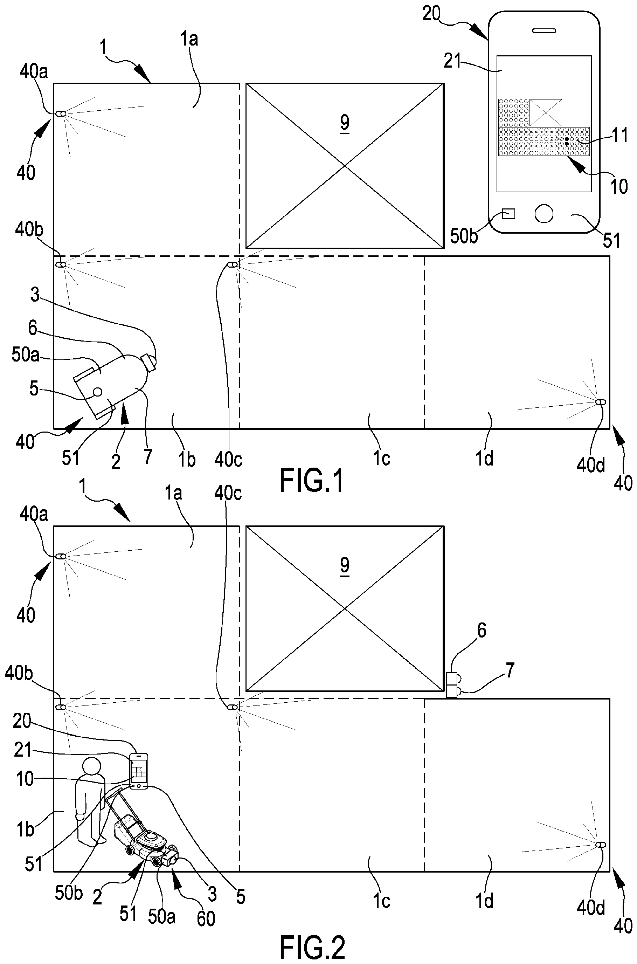

By way of example, the mobile device can be a self-driving robot lawnmower of the type shown schematically in figure 1. Alternatively, the mobile device can be a tractor suitable for mowing turfgrass and/or for administering fertilizer.

In possible embodiments of the mobile device (especially if it includes battery-powered moving means), the mobile device is associated with a base, designed to perform specific operations, such as for example recharging or refueling operations.

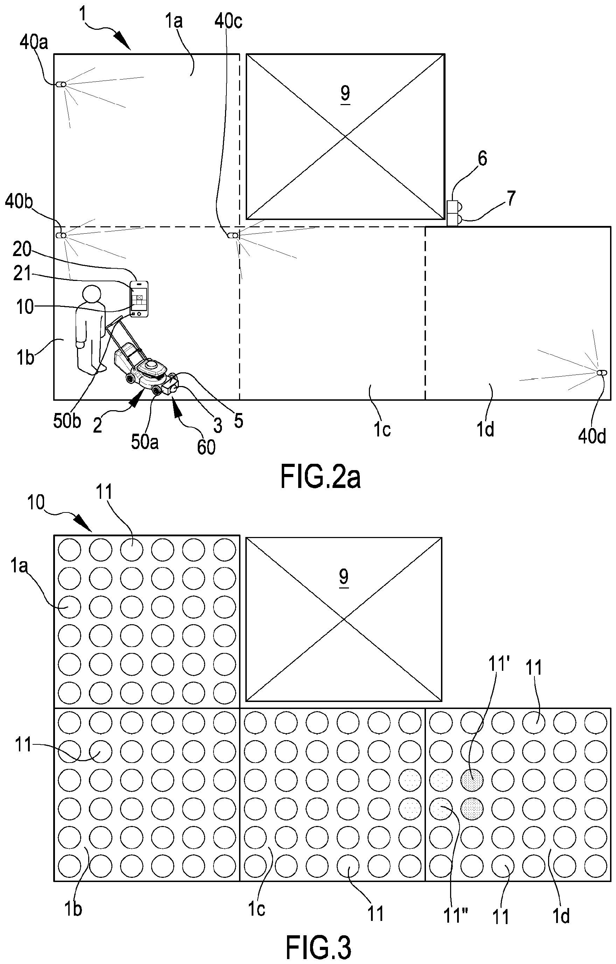

Alternatively, the mobile device can be a manually driven lawnmower, i.e. with manual control piloted by an operator, of the type shown schematically in figure 2.

**Control unit 50**

The mobile device described herein can comprise at least a control unit (50) intended to control the operating conditions implemented by the mobile device itself and/or to control the steps of the installation method according to the present invention.

According to an alternative technical solution, the mobile device described herein can be associated, by means of one or more suitable nodes interfacing on a communication network, with a control unit arranged at a distance (for example in the cloud) from the mobile device and intended to control the operating conditions implemented by the mobile device and/or control the steps of the installation method according to the present invention.

In both of the illustrated technical solutions, the control unit can comprise a single unit or can be made up of a plurality of distinct control units, depending on design choices and operational requirements.

The term *"control unit"* refers to an electronic component which can comprise at least one of the following: a digital processor (CPU), an analog type circuit, or a combination of one or more digital processors with one or multiple analogue type circuits. The control unit can be *"configured"* or *"programmed"* to carry out some steps: this can be carried out by any means that can allow to configure or program the control unit. For example, if a control unit comprises one or more CPUs and one or more memories, one or more programs can be stored in appropriate memory banks connected to the CPU or CPUs. The program or programs contain instructions which, when executed by the CPU(s), program or configure the control unit to perform the operations described in relation to the control unit. Alternatively, if the control unit is or includes analog type circuitry, then the control unit circuit can be designed to include configured circuitry, when in use, to process electrical signals in such a way as to carry out the steps relating to the control unit.

According to the following description, the control unit (50) can be conceived both as an assembly comprising a local control device and a remote control device having the same technical characteristics previously described in relation to the control unit (50).

**Work area 1**

The mobile device is configured to operate in a work area. The term *"work area"* refers in particular to an area defined in an outdoor environment, therefore a land such as a garden, turfgrass, agricultural land or a cultivated land. The work area 1 can have homogeneous characteristics (for example a plot of land entirely used as a lawn) or heterogeneous characteristics.

The work area 1 is a two-dimensional entity defined by at least one contour, which separates the work area from adjacent areas. This contour can coincide at least partly with a physical obstacle (for example a wall or a hedge) that the mobile device cannot cross. Alternatively, this contour can coincide at least partly with a separation line of the work area with an adjacent installation (for example a road or a swimming pool) to which the mobile device must not have access.

The contour of the work area can coincide at least partly with the outer perimeter of the work area or with a stretch of the outer perimeter of the work area. Additionally, the contour of the work area can coincide with a perimeter inside the work area or with a stretch of a perimeter inside the work area, this occurring in particular when physical obstacles (e.g. a tree or a flower bed) or installations (e.g. a swimming pool) arranged inside the work area must be excluded from the work area.

**Global navigation satellite system**

The term *"global navigation satellite system"* refers to a system of geo-radiolocation and land, sea or air navigation, which uses a network of artificial satellites in orbit and pseudoliths. The acronym "GNSS" (from the English "global navigation satellite system") is also often used for this system.

A global navigation satellite system is aimed at providing a geolocation service, i.e. a geo-spatial positioning service with global coverage that allows special electronic receivers to determine their geographical coordinates (longitude, latitude and altitude) on any point of the Earth's surface or atmosphere with an error of a few meters, processing radio frequency signals transmitted in line of sight by satellites.

In the present description and in the appended claims, reference will mainly be made, as an example provided for purely explanatory but not limiting purposes, to the Global Positioning System (GPS) technology, derived from the United States and currently fully operational. However, it should be noted that different technologies can be used equivalently for the purposes of the present invention, for example the GLONASS technology (Russia), the Galileo technology (Europe) and the Beidou technology (China).

<u>DETAILED DESCRIPTION</u>

**Land Monitoring System 100**

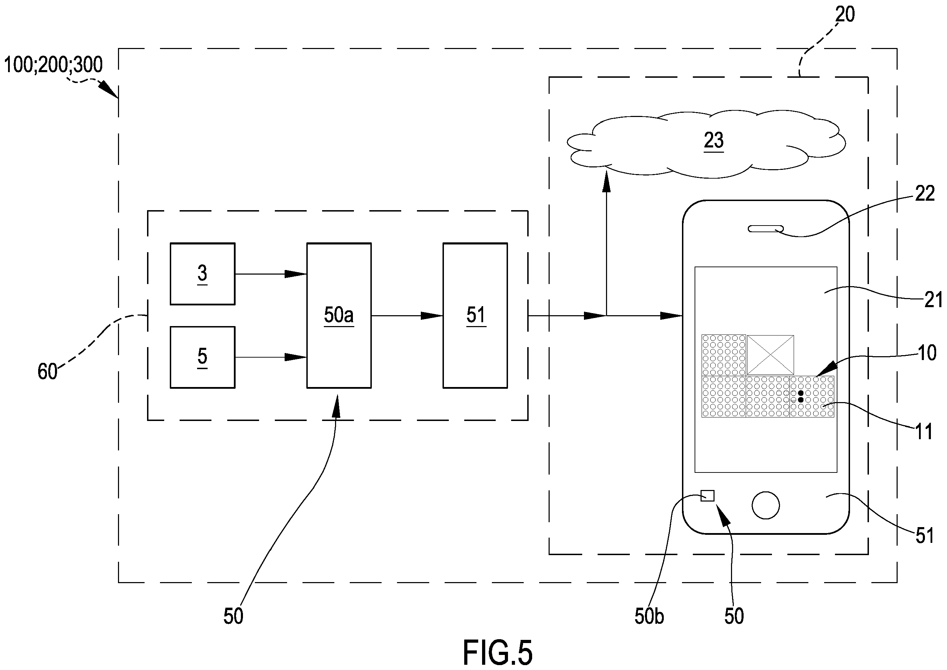

The term "land monitoring system" 100 refers to a system, schematically shown in figure 5, used for the detection of one or more parameters representative of the condition of land, and in particular of the condition of turfgrass of gardens and/or agricultural land, within a work area 1. The work area 1, schematically shown in figures 1, 2 and 2a, can have various shapes, not limited to the geometric shape represented in the attached figures, including square shape, rectangular shape, circular shape, elliptical shape or a combination thereof (typically presenting an irregular shape). The work area 1 can represent the extension of a small size garden or, in contrast, a substantially larger plot of land. Furthermore, the work area can be an area within which it is intended to operate by means of, for example, a mobile device 2, in particular a lawn mower or a tractor.

The work area 1 can be virtually divided into areas of competence 1a, 1b, 1c, 1 d, as shown schematically in figures 1, 2 and 2a: each area of competence comprises a plurality of monitoring zones and can have different shapes, for example rectangular shape, square shape, circular shape, irregular shape or a combination thereof. The square shape of the competence zones shown in the attached figures is shown solely for illustrative and non-limiting purposes. As will become clear below, the term "area of competence" refers to a portion of the work area 1 within which a mobile device 2 or a device 40 for administering a substance, for example water or fertilizer, are in charge of operating. The monitoring zones define a discretization of the work area 1, these zones being able to assume a square shape, a rectangular shape, a circular shape, an elliptical shape or a combination thereof and each monitoring zone having a reduced extension compared to the overall extension of the work area 1 Each monitoring zone in the work area 1 can be uniquely identified by means of proper coordinates. For example, if the monitoring zone has a circular shape, a first and a second coordinate representative of the position of the center of the monitoring zone and a third coordinate representative of the radius of the monitoring zone can be used, as well as if the monitoring zone has square shape, a first and a second coordinate representative of the position of an edge of the monitoring zone and a third coordinate representative of the side or of the diagonal of the monitoring zone can be used. Advantageously, the set of all monitoring zones substantially defines the extension of the work area 1.

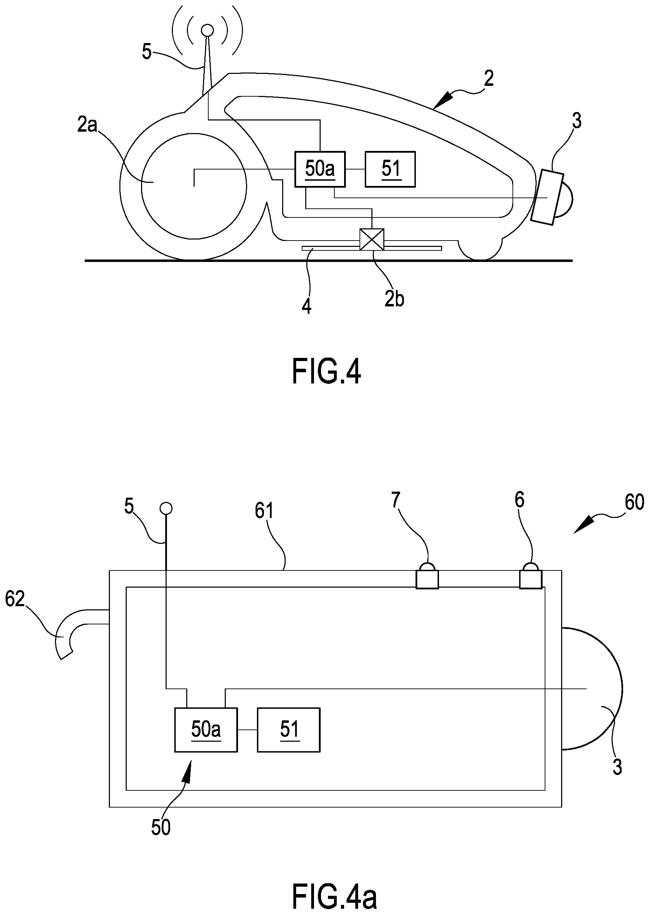

In a preferred embodiment of the present invention, the mobile device 2 is a lawn mower, whose payload is advantageously represented by a rotating blade 4 moved by actuation means 2b, for example an electric engine or a combustion engine: in particular the mobile device drawn schematically in figures 1 and 4 is a self-driving robot lawnmower, while the mobile device 2 of figure 2 is a manually driven lawnmower, i.e. with manual control operated and moved by an operator. The mobile device 2 comprises a supporting frame carrying moving means 2a, for example an electric engine or a combustion engine kinematically connected to the wheels of the mobile device 2, configured to determine the movement of the device at least within the work area 1. In detail, the mobile device 2 comprises three or more wheels, of which at least one drive wheel, the wheels being carried by the frame of the mobile device 2: if the mobile device is moved by an electric engine, the frame is configured to house at least a battery connected to the electric engine. This battery is in particular of the rechargeable type, whereby the mobile device comprises at least one connector aimed at allowing connection to a charging station, the latter not shown in the attached figures. In a preferential embodiment, the mobile device 2 has a maximum dimension between 10 cm and 5 meters, in particular between 20 cm and more particularly between 30 cm and 50 cm. However, the possibility of providing mobile devices 2 having alternative dimensions, for example substantially larger, is not excluded.

As described in greater detail hereinafter, at least a part of the monitoring system 100 can be associated with the mobile device 2, in particular carried by the mobile device 2, in a removable way, as shown in figures 2 and 2a: alternatively the monitoring system 100, or at least a part of it, can be integrated into the mobile device 2, as shown in figures 1 and 4. The monitoring system 100 comprises at least a first detector 3 configured to detect at least one monitoring parameter related to one or more monitoring zones of the work area 1: the monitoring parameter can include at least one spectral parameter and/or a climatic parameter relating to one or more monitoring zones of the work area.

In particular, the spectral parameter includes at least one frequency information related to a monitoring zone, wherein "frequency information" means one or more frequency values related to a light signal detected by the first detector in correspondence with the monitoring zone and/or the intensity associated with these frequency values. In greater detail, the spectral parameter comprises a measurement of the spectral reflectance of a light signal obtained from the first detector 3 in correspondence with each monitoring zone: the spectral reflectance measurement can be related to the frequency range corresponding to red and near infrared, in particular related to frequencies corresponding to wavelengths between 400 nanometers and 1 millimeter. The climatic parameter can instead be a representative signal of temperature, moisture or brightness.

The first detector 3 can operate both with natural lighting (sunlight) and with artificial lighting (being an illuminator associated with the first detector 3, this illuminator including in particular an array of LED diodes capable of emitting suitably modulated light).

The detection zone of the spectral parameters by means of the first detector 3 can be set by adjusting the inclination of the first detector with respect to the ground, this inclination being able to vary between a zero inclination (first detector 3 oriented parallel to the ground) and a maximum inclination (first detector 3 oriented so as to form an angle of about 60° with the ground).

The first detector 3 is configured to perform a plurality of measurements of the monitoring parameter, and in particular of the spectral parameter, in correspondence with each monitoring zone, and, according to these measurements, provide an average value of the spectral parameter related to a single monitoring zone (being an average value of the spectral parameter definitely more reliable than single values). This average value is then computed for each monitoring zone according to the respective measurements made in correspondence with each monitoring zone. In greater detail, each detection carried out by means of the first detector 3 returns a value of the spectral parameter related to a portion of the work area which may have a smaller extension than the extension of the monitoring zone in correspondence with which the detection was carried out, the first detector 3 therefore being able to frame a reduced portion of the monitoring zone. The plurality of detections carried out by means of the first detector 3 are therefore suited for framing further portions within the same monitoring zone, so as to provide the average value of the spectral parameter representative of this monitoring zone. The system optionally provides for the possibility of varying the extension of the monitoring zones where to detect the spectral parameter, the system being also able to provide for the possibility of varying the temporal frequency for the detection of the spectral parameters (alternatively the time interval between subsequent detections).

According to a preferential embodiment, the first detector 3 comprises an optical sensor and an infrared detector, in particular of the near infrared, suited for detecting this spectral parameter representative of the monitoring zone of the work area. Furthermore, this optical sensor can be configured to detect the climatic parameter, providing the temperature and/or moisture and/or brightness information. Alternatively or in combination, the first detector 3 can comprise a moisture sensor 6 and/or a temperature sensor 7, distinct from the optical sensor, and configured to provide the climatic parameter. The moisture and temperature sensor can for example be resistive or capacitive sensors.

The monitoring system further comprises at least a second detector 5 configured to detect, within the work area 1, at least one piece of position information relating to the monitoring zone of the detection of the monitoring parameter, in particular of the spectral parameter, wherein this position can be given in absolute terms or with respect to the position of a reference element. The second detector 5 can comprise, according to a preferential embodiment, a GNSS (Global Navigation Satellite System) sensor, in particular a sensor implementing the GPS (Global Positioning System) technology: this sensor is therefore able to provide information about one's own geographical position in absolute terms, for example by providing the polar coordinates related to the monitoring zone of interest. Alternatively or also in combination, the second detector 5 can comprise a time-of-flight sensor configured to detect a distance with respect to a reference element (such reference element being able for example to coincide with a charging station). The reference element can be arranged within or at least close to the work area 1 and the time-of-flight sensor is configured to estimate its own distance with respect to the reference element. Knowing the position of the reference element in the first place, it is therefore possible to provide an indication about the position of the monitoring zone within the work area 1. The second detector 5, according to an embodiment, can comprise the reference element and a pair of antennas carried by the mobile device 2 for detecting a time-of-flight from this reference element (this solution with the double antenna allows to determine the distance of the mobile device 2 with respect to the reference element and also the orientation of the mobile device 2).

According to a further embodiment, the second detector 5 can comprise a radar sensor or an ultrasound emitter for determining the position of the monitoring zone.

The land monitoring system further comprises at least a control unit 50 connected to the first detector 3 and to the second detector 5 and configured to obtain at least one monitoring index from the corresponding monitoring parameter: in detail, the monitoring index comprises a spectral index and/or a climatic index obtained respectively from the spectral parameter and from the climatic parameter.

The climatic index can be an elaboration of the climatic parameter detected by the first detector 3: for example the climatic index can be a temperature, moisture or brightness value obtained by the control unit 50 from the signal supplied by the first detector 3 or from moisture and temperature sensors 6, 7.

In greater detail, the spectral index is obtained from the spectral parameter detected by the first detector 3: in particular, this spectral index is obtained from the average value of the spectral parameter, wherein said average value is calculated on the basis of the plurality of measurements of the spectral parameter.

According to a preferential embodiment, the spectral index can be a Normalized Difference Vegetation Index (NDVI), a Normalized Difference Red Edge Index (NDRE) and/or a Water Band Index (WBI).

The NDVI index is representative of the level of vigor and health of the crop and is calculated as the ratio of the difference and the sum of the radiations reflected in the near infrared and in the red, i.e.:

$$NDVI = \frac{(NIR - VIS)}{NIR + VIS}$$

wherein VIS and NIR stand respectively for the spectral reflectance measurements acquired in the visible (red) and near infrared (Near Infra Red) fields. This ratio determines a variable NDVI value between -1 and 1 representative of the vigor and/or health of the turfgrass: in particular, an NDVI value between -1 and 0 can be representative of the absence of turfgrass, for example of the presence of a surface in concrete, an NDVI value around 0.05 can be representative of a turfgrass in a poor health condition (for example wherein the turfgrass is dry or even dead), an NDVI value between 0.2 and 0.5 can be representative of a turfgrass in a fairly healthy condition, but which needs special attention or for example thin turfgrass, while an NDVI value between 0.5 and 1 can be representative of turfgrass in good/excellent health condition and characterized by dense grass. Furthermore, a very low NDVI value can also be representative of a detection carried out outside the turfgrass, for example in correspondence with concrete walkways or in the presence of gravel: in other words, a low value of the NDVI index can be indicative of the fact that the detection was carried out in a point outside the work area.

The NDRE index is also designed to provide an indication of the health condition of the soil: however, unlike the NDVI index, the NDRE index is a function of the radiations reflected in the frequency band or wavelengths found in the transition zone between red and near infrared (Red Edge). In greater detail, the NDRE index is obtained by the following formula:

$$NDRE = \frac{(NIR - \Re)}{NIR + \Re}$$

This ratio determines an NDRE value ranging between -1 and 1 representative of the health condition of the turfgrass: in particular, an NDRE value between -1 and 0 can be representative of the absence of turfgrass, for example the presence of a surface in concrete, an NDRE value of around 0.1 may be representative of a turfgrass in a poor health condition (for example wherein the turfgrass is dry or even dead), an NDRE value between -0.4 and 0.2 can be representative of a turfgrass in a condition of stress that requires particular attention, while a value of NDRE between 0.2 and 1 can be representative of a turfgrass in good/excellent health condition.

The WBI index is a reflectance measurement subject to variations in the presence of water in the vegetation: in other words, the WBI index provides an indication of the hydration condition of the soil and turfgrass in the work area. In particular, the WBI index is given by the ratio between the absorption at 970 nanometers and the absorption at 900 nanometers:

$$WBI = \frac{\rho_{970}}{\rho_{900}}$$

For example, WBI values between 1.5 and 2.8 can be representative of proper turfgrass hydration: similarly, lower values can be representative of poor turfgrass hydration. Although only the NDVI, NDRE and WBI spectral indices have been described, the control unit 50 can be configured for the calculation of further spectral indices representative of one or more characteristics of the monitoring zone, therefore the present invention should not be intended as limited to the examples of spectral indices cited above. In a simplified embodiment of the present invention, it is possible for example to provide spectral indices coinciding with spectral parameters calculated at predetermined wavelengths.

Furthermore, the control unit 50 is configured to associate the position information, obtained by means of the second detector 5, to the spectral index obtained on the basis of the spectral parameter detected in correspondence with a monitoring zone of the work area 1. In other words, this step makes it possible to associate a corresponding spectral index, such as an NDVI, NDRE or WBI index or a combination thereof, to a monitoring zone, identified by means of the position information obtained from the second detector 5. The monitoring system 100 further provides that the detection of a spectral parameter of a monitoring zone takes place substantially simultaneously with the detection of the position information of this monitoring zone: in this way, the position detected by the second detector 5 can actually be considered representative of the monitoring zone in correspondence with which the spectral parameter was measured.

Furthermore, the control unit 50 can be configured to associate the position information, obtained by means of the second detector 5, to the climatic parameter detected in correspondence with a monitoring zone of the work area 1, wherein this climatic parameter is an ambient or local temperature or moisture value, for example the soil temperature and/or moisture in correspondence with a monitoring zone identified by means of the position information.

The monitoring system provides that the detections carried out by the first and second detectors 3, 5, as well as the steps for obtaining the spectral index and the consequent association of the position information, are implemented for a plurality of different monitoring zones within the work area 1, so as to provide an indication of the health condition of each portion of the land. According to an embodiment, the health condition of each monitoring zone of the work area 1 can be estimated on the basis of a single spectral index, for example on the basis of the NDVI index: alternatively, the health condition of each monitoring zone of the work area 1 can be estimated as a function of several spectral indices associated with the same monitoring zone. For example, the health condition can be defined on the basis of a mathematical relation between the NDVI index and the NDRE index.

The control unit 50 can also be configured to create or to access a virtual map 10 representative of the work area 1 and associate, as a function of the position information, a representative description of the spectral index with at least a predetermined portion 11 of said virtual map 10: the virtual map comprising the representative descriptions of the spectral indices is shown schematically in figures 1, 2 and 2a and in greater detail in figure 3.

According to an embodiment, the virtual map 10 can be a map defined in terms of geographic coordinates, so as to define at least the external and/or internal contours of the work area. The monitoring system can perform an initial installation, which involves a definition step of the geographical coordinates of the work area 1, on whose basis the contour of the work area is then traced to define a virtual map. This definition step can be experimental, wherein an operator walks the contour of the work area discreetly detecting the geographic coordinates by means of the second position detector 5 (for example a GPS detector) associated with the operator himself. For this purpose, the monitoring system can provide for the detection of position information by means of a smartphone or tablet carried by the operator. Alternatively, in the definition step, the coordinates of the contour of the work area can be determined by means of a pre-existing online satellite map, advantageously accessible via smartphone, tablet or PC, on which the operator indicates the contours of the work area, consequently obtaining the corresponding geographical coordinates representative of the contour.

Therefore, the virtual map 10 can be an online satellite map (for example Google Maps) advantageously accessible via smartphone, tablet or PC: the control unit 50 is then configured to associate this representative description of the spectral index with the virtual portions of this map.

In summary, the monitoring system detects the spectral parameters in each monitoring zone, it obtains at least one spectral index (for example a spectral index of the following: NDVI, NDRE, WBI) for each monitoring zone, it associates the position information (for example the geographical coordinates of each monitoring zone) to each monitoring zone, it accesses or creates a virtual map and it associates the representative description of the corresponding spectral index to at least one predetermined portion of this map. According to a preferential embodiment shown in figure 2, the map 10 comprises a plurality of portions 11 to which the control unit 50 is configured to associate the spectral indices representative of the corresponding monitoring zones, wherein each portion 11 is associated or can be associated with a monitoring zone of the work area 1.

The representative description of each spectral index can comprise a chromatic scale, for example a colour representative of a corresponding value of said spectral index: by way of example, one or more portions 11 of the map 10 can be red (marked in figure 2 by the reference number 11') if the spectral index value is above or below a first predefined threshold or lies outside a first threshold range, for example if the NDVI index value is lower than 0.2. Furthermore, one or more portions 11 of the map 10 can be orange (marked in figure 2 by the reference number 11") if the spectral index value is above or below a second predefined threshold or lies outside a second threshold range, for example if the value of the NDVI index is between 0.3 and 0.5. Similarly, one or more portions 11 of the map 10 can be green if the spectral index value is above or below a third predefined threshold or included within a third range of threshold values, for example if the value of the NDVI index is higher than 0.6.

The representative description of the spectral indices thus provides information about a condition of the soil, for example its vitality or water content. This description can be representative of a single spectral index, so for example a representative description of the NDVI index, or can derive from the combination of two or more spectral indices, for example a representative description based on the algebraic sum of the NDVI index and/or the NDRE index and/or the WBI index. The combination of multiple spectral indices to provide a representative description of the health condition of the soil can, in certain cases, be more advantageous in relation to the assessment of individual spectral indices: the combination of multiple spectral indices allows to provide more reliable results in the assessment of the health condition of the soil than those provided by the assessment of a single spectral index. For example, the assessment of the algebraic sum of the NDVI and NDRE indices can be particularly useful to assess the absence of turfgrass (for example if the monitoring system happens to be located in a cemented part of the work area) or the presence of substantially dead grass.

Alternatively, this description can present numerical information representative of each spectral index, for example it can include the actual value of the respective spectral index: in other words, if a monitoring zone has a spectral index of 0.5, the corresponding portion 11 of the virtual map 10 will display the value 0.5.

The virtual map 10, comprising portions 11 representative of the monitoring zones of the work area 1 and the representative descriptions of the respective spectral indices, are preferably displayed on a screen 21: in this regard, the monitoring system 100 advantageously comprises a remote device 20, for example a smartphone, a tablet or a PC, comprising the screen 21, as shown schematically in figures 1, 2, 2a and 5.

The remote device 20 can further carry a remote control device 50b of the control unit 50: in this case, the operations for calculating the spectral indices, as well as the operations for accessing or creating the virtual map 10, can be implemented directly by the remote device 20. Furthermore, the remote device 20 can comprise the second position detector 5, as shown schematically in figure 2. In addition, according to an optional embodiment not shown in the attached figures, the remote device can comprise the first detector 3.

The monitoring system 100 can further comprise a monitoring device 60 having a casing 61, in particular a support structure casing, carrying the first detector 3, the second detector 5 and a local control device 50a of the control unit 50, as shown schematically in figure 4a. The casing 61 further comprises couplings 62 configured to bind the casing to a mobile device 2: the couplings 62 can comprise, for example, an interlocking coupling, a hook or a magnet. The monitoring device 60 (see figure 4a) can be associated and bound to any type of mobile device 2 and remotely connected, by means of a communication system 51, to the remote device 20. In detail, the monitoring device 60 has preferably, but not limitingly, dimensions between 50 mm and 400 mm in length, between 50 mm and 400 mm in width and between 50 mm and 400 mm in height. Advantageously, this monitoring device 60 is portable, so that an operator can easily carry it by hand to bind it when necessary to a mobile device 2. In other words, the monitoring device 60 defines a single body comprising the necessary elements to allow the local detection of the spectral parameters. Furthermore, the monitoring device 60 can also house the moisture sensors 6 and the temperature sensors 7, as shown in figure 4a, connected to the local control device 50a. The measured moisture and/or temperature data can be processed by the local control device 50a, or sent via the communication system 51 to the remote device 20, wherein the remote control unit 50b can be configured to process them.

Alternatively, the moisture and/or temperature sensors 6, 7 can be integrated into the mobile device 2, as shown in figure 1, and connected to the local control device 50a: likewise, the detected moisture and/or temperature data can be processed by the local control device 50a, or be sent by means of the communication system 51 to the remote device 20, wherein the remote control unit 50b will be processing them.

Furthermore, the moisture and/or temperature sensors 6, 7 can be fixed in the work area or near the work area as shown in figure 2: in the latter case, the moisture and/or temperature sensor 6, 7 are physically separated from the monitoring device 60 and/or from the mobile device 2, but operatively connected, by cable or over the air, to the control unit 50 of the monitoring system. The detected moisture and/or temperature and/or brightness data can be sent via the communication system 51 to the remote device 20, wherein the remote control unit 50b will be processing them. Alternatively, the moisture and/or temperature and/or brightness data can be sent via the communication system 51 to the monitoring device 60 or to the mobile device 2, the local control device 50a being configured to process such data.

The monitoring system 100 can also comprise the communication system 51 configured to remotely transfer one or more data, the latter being at least one of the following: the spectral parameters, the spectral indices, the climatic parameters, the climatic indices, the position information regarding each monitoring zone: in particular the communication system 51, schematically shown in figure 4 on board the mobile device 2, is configured to send the spectral and/or climatic parameters and optionally the spectral and/or climatic indices to the remote device 20, the latter equipped with a respective communication system 51 configured to receive such data. The communication system 51 can be configured to transmit data either by means of a connection cable or wirelessly, for example by means of the WIFI protocol, Bluetooth, or other radio-frequency protocol. The communication system 51 can also be housed in the monitoring device 60, in particular inside the casing 61, and connected to the local control device 50a, to the first detector 3 and optionally to the second detector 5 of the monitoring device 60. Similarly, the communication system 51 can be further housed in the remote device 20 and connected to the control unit 50 of the remote device 20 itself. If the remote device 20 comprises the second detector 5, the latter is also connected to the communication system 51 of the remote device 20. In other words, the monitoring device 60 is configured to transmit data to and receive data from the remote device 20.

The communication system 51 of the monitoring device 60 or of the remote device 20 can also be configured to send and/or receive data, such as for example the spectral parameters, the spectral indices, the climatic parameters, the climatic indices, the position information of each monitoring zone, to and/or from a remote server 23, for example a cloud service, configured to store such data. Furthermore, the remote server 23 can be configured to receive the map 10 (for example in terms of geographical coordinates or as a representative image of the work area 1), the portions 11 of the map 10 and the description associated with each portion. The remote server 23 can be reached, by means of the communication system 51, both by the monitoring device and by the remote device 20: therefore the remote server can be interposed between the remote device 20 and the monitoring device 60, so that the data detected on site by the first and second detectors 3, 5 and optionally by the moisture and temperature sensor, are sent by means of the communication system 51 to the remote server 23, which in turn sends said data to the remote device 20 to allow an operator to visualize them.

For example, a given monitoring zone can be associated with the NDVI (or NDRE or WBI) value, with its geographic location, with the local temperature and the local moisture. The values regarding the environmental temperature and/or moisture of each monitoring zone of the work area 1 can be visualized on the virtual map 10.

The monitoring system 100 is also configured to provide, according to the value of the spectral indices of each monitoring zone and optionally according to the climatic indices (for example the values regarding temperature and/or moisture), the growth rate of the vegetation for each monitoring zone.

Furthermore, the control unit 50 can be configured to detect the occurrence or the onset of dormancy of a turfgrass in the work area according to the monitoring index and/or the monitoring parameter. Turfgrass dormancy can be defined as a stagnant condition of the soil wherein grass growth is significantly reduced or equal to zero and the grass stops photosynthesizing. In particular, the state of dormancy of a monitoring zone can be estimated according to the environmental or soil temperature, of one or more spectral indices (in particular according to the NDRE index), and/or the height of the grass (estimated by means of a predictive algorithm or detected directly by means of a suited sensor or detected indirectly, for example, by reading a torque or an absorption of a predetermined load, such as a rotating blade of the mobile device 2). Furthermore, the state of dormancy can be estimated according to a variation of these parameters (for example of the detected variation of the height of the grass in a predetermined time interval). In a preferential embodiment, the control unit 50 is configured to further detect the time of year, for example by accessing a calendar. By way of example, if a decrease in temperatures and in the NDRE value is detected, and if the mobile device 2 detects very little or no grass growth, the control unit 50 can warn the operator that the turfgrass has entered into a state of dormancy and suggest to put the mobile device in a storage spot or alternatively drive the mobile device 2 towards this storage spot.

The transmission and processing of the data detected by the monitoring system 100 can be configured in different ways: three different configurations are described below according to the same inventive concept. It should be noted that, although in the following description of these configurations particular reference will be made to spectral parameters and spectral indices, what has been described with particular reference to spectral parameters and spectral indices has a more general value, and can therefore be extended to any monitoring parameter and to any monitoring index, therefore also to climatic parameters and climatic indices.

According to a first configuration, the communication system 51 of the remote device 20 is configured to receive the spectral parameters transmitted by the communication system 51 of the monitoring device 60: the remote control device 50b of the remote device 20 is therefore configured to obtain the corresponding spectral index and optionally the representative description of the corresponding spectral index. The first configuration can also provide that the communication system 51 of the remote device 20 is configured to receive from the monitoring device 60 the position information, detected by the second detector 5 carried by the monitoring device, related to the spectral parameters detected by the first detector 3. Therefore, the first configuration provides that the monitoring device 60 is configured to send, by means of the communication system 51, the data detected by the first and second detectors 3, 5 to the remote device 20, which in turn is responsible for carrying out the calculation steps to obtain the spectral indexes and associate the latter with the corresponding position information. Furthermore, the remote device 20 is configured, according to the first configuration, to access and display the virtual map 10 and the portions 11 and to associate the representative description of the corresponding spectral indices with said portions 11.

According to a second configuration, the communication system 51 of the remote device 20 is configured to receive at least one spectral index transmitted by the communication system 51 of the monitoring device 60: the monitoring device 60 is therefore configured to obtain, by means of the control unit 50, the spectral indices on the basis of the spectral parameters detected by the first detector 3. In other words, the second configuration provides that the monitoring device 60 is configured to obtain the spectral indices and send them by means of the communication system 51 to the device remote 20, which in turn is responsible for accessing and displaying the virtual map 10 and the portions 11 comprising the representative description of the respective spectral indices. The second configuration can also provide that the communication system 51 of the remote device 20 is configured to receive from the monitoring device 60 the position information, detected by the second detector 5 of the monitoring device 60, related to the transmitted spectral indices. Alternatively, the position information can be obtained from a second detector 5 of the remote device 20.

According to a third configuration, the communication system 51 of the remote device 20 is configured to receive the representative description of the spectral indices transmitted by the communication system 51 of the monitoring device 60: the remote control device 50b of the remote device 20 is therefore configured to receive this description and display it on the virtual map 10 in correspondence of the portions 11. The local control device 50a of the monitoring device 60 is instead configured, according to the third configuration, to receive the spectral parameters detected by the first detector 3, to obtain the spectral indices on the basis of these spectral parameters and to define the representative description of said spectral indices. The third configuration can also provide that the communication system 51 of the remote device 20 is configured to receive from the monitoring device 60 the position information, detected by the second detector 5 of the monitoring device 60, regarding the transmitted spectral indices. Alternatively, the position information can be obtained from a second detector 5 of the remote device 20.

As can be deduced from the description of the present invention, the monitoring system 100 can have constructive architectures that differ from each other at least in terms of location of the constituent elements: in particular the first and the second detector 3, 5 can be integrated inside the mobile device 2 (see figures 1 and 4), or they can be housed in the casing 61 to define the monitoring device 60 as configured to be associated with a mobile device. Furthermore, the location of the second detector 5 can also vary, since the latter can be part of the mobile device 2, of the monitoring device 60 or of the remote device 20. In this regard, three embodiments according to the present invention are described below for purely illustrative and non-limiting purposes.

According to a first embodiment, shown schematically in figures 1 and 4, the monitoring system 100 provides that the first detector 3 and the second detector 5 are integrated in the mobile device 2, the latter further comprising the local control device 50a. The remote device 20 is then configured to receive the data and display the portions 11 on the virtual map 10. When the self-driving mobile device 2 is in motion, new spectral parameters are detected by the first detector 3 so as to obtain, by means of the control unit 50 of the remote device 20 or of the mobile device 2, updated spectral indices corresponding to each monitoring zone of the work area 1.

According to a second embodiment, schematically shown in figure 2, the monitoring system 100 comprises the monitoring device 60 associated with the mobile device 2, wherein the monitoring device 60 includes the local control device 50a, the first detector 3 and the communication system 51, while the remote device 20 comprises at least the remote control device 50b, the second detector 5 and the screen 21. According to this second embodiment, the monitoring system 100 provides that, during the detection operations, the operator carries along the remote device 20, for example carrying it in his pocket, or that the remote device 20 is also bound to the mobile device 2. Advantageously, the remote device 20 is located in the vicinity of the first detector 3, so that the position detected by the second detector 5 of the remote device 20 substantially coincides with the monitoring zone framed by the first detector 3. In other words, in this operating condition, the position of the monitoring device 60 is assumed to coincide with the position of the remote device 20 (in particular it is assumed that the position of the first detector 3 of the monitoring device 60 coincides with the position of the second detector 5 of the remote device 20).

According to a third embodiment, schematically shown in figure 2a, the monitoring system 100 comprises the monitoring device 60 associated with the mobile device 2, for example with a manually operated mobile device, and wherein the monitoring device 60 includes the first detector 3, the second detector 5, the local control device 50a and the communication system 51. In this third embodiment, the remote device 20 comprises the screen 21, the remote control device 50b and the communication system 51 configured to receive data from the communication system 51 of the monitoring device 60: the remote device is therefore also configured to visualize the virtual map 10 and the portions 21, representative of the spectral indices detected by the monitoring device 60.

## Land monitoring method

The land monitoring method is not part of the present invention: advantageously this method can employ the land monitoring system 100 described above. It should be made clear that, although in the following description of the land monitoring method particular reference will be made to spectral parameters and spectral indices, what has been described with particular reference to spectral parameters and spectral indices has a more general value, and it can therefore extend to any monitoring parameter and to any monitoring index, therefore also to climatic parameters and climatic indices. The method substantially provides for implementing the operational steps of the previously described monitoring system 100 and which the control unit 50 is configured to perform.

In particular, the monitoring method provides for detecting, within the work area 1, by means of the first detector 3, at least one spectral parameter related to one or more monitoring zones of the work area 1. This method further provides for detecting, within the work area 1, by means of the second detector 5, position information related to the monitoring zone of the spectral parameter.

The method therefore provides for obtaining the spectral index for each monitoring zone from the detected spectral parameters. In particular, the method provides for a plurality of spectral parameter detections in correspondence with each monitoring zone: the spectral index related to a given monitoring zone is then obtained from the plurality of measurements of the spectral parameter carried out within that monitoring zone. In greater detail, the method provides for calculating an average of the plurality of measurements of the spectral parameter carried out within a monitoring zone, and for obtaining the corresponding spectral index of this monitoring zone on the basis of the previously calculated average.

The method further provides for associating the position information related to a monitoring zone to the respective spectral index of the same monitoring zone: in this way, each monitoring zone presents one piece of information about its geographical position and the corresponding value of the spectral index.

The method further comprises a step of accessing a virtual map 10 representative of the work area 1 and associating, according to the position information, a representative description of the spectral index with at least a portion 11 of the virtual map 10. In particular, the method provides for the screen display of the virtual map 10 and of the portions 11, wherein the virtual map 10 comprises a plurality of portions 11 each located on the virtual map 10 in a manner corresponding to the location of the corresponding monitoring zone in the work area 1 (according to the position information detected by the second detector 5). It should be noted that the detection of the spectral parameters related to a monitoring zone and the detection of the position of this monitoring zone takes place substantially at the same time.

Further steps of the method, implemented by the control unit 50 of the monitoring system 100, have already been previously exposed during the description of the monitoring system 100, these steps being referred to and incorporated herein.

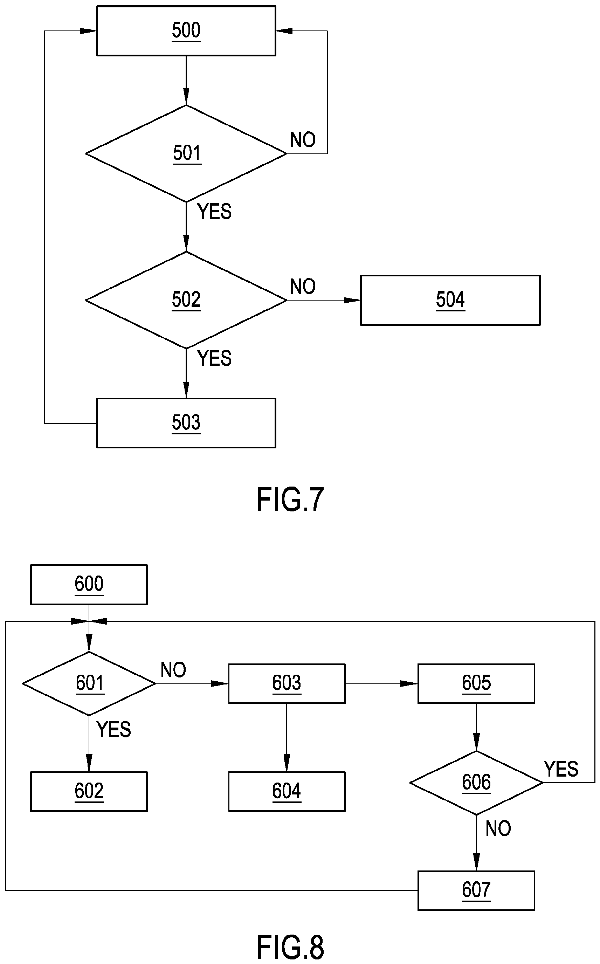

Figure 8 shows a flow chart comprising some steps of the monitoring method according to a preferential operating mode. In detail, this operating mode of the land monitoring method provides a step 600 of data reception from the first and from the second detector 3, 5, and a step 601 for verifying whether the received spectral parameters belong to the same monitoring zone. The data received in the step 600 can further comprise information about the virtual map 10, the portions 11 and the arrangement and/or the size and/or shape of the monitoring zones of the work area 1.

If the spectral parameters received belong to the same monitoring zone (YES), the method provides for a step 602 to collect such data, on whose basis an average is then calculated for this monitoring zone. If, on the other hand, the received spectral parameters do not belong to the same monitoring zone (NO), the method provides for a step 603 to obtain the spectral indices (for example NDVI, NDRE or WBI) on the basis of the average of the spectral parameters calculated in step 602. In other words, if the new spectral parameters belong to a new monitoring zone and the collected spectral parameters of the preceding monitoring zone are in sufficient number to estimate a statistically significant average, the method provides for the calculation of the spectral indices of this monitoring zone on the basis of this average and the consequent collection of further spectral parameters related to the new monitoring zone.

The method further provides for a step 604 for providing the representative description of said spectral indices, for example a chromatic or numerical index to be associated with a portion 11 of the map 10 representative of the monitoring zone of the work area 1.

The method also provides for a step 605 for detecting new data from the first and the second detector 3, 5, in particular new spectral parameters associated with the position of a new monitoring zone, and for a step 606 for verifying whether the acquired data belong to a same area of competence or to a new area of competence. If the new data are representative of the same area of competence, the method provides for returning (YES) to the initial detection step to collect the spectral data of the monitoring zones of the same area of competence. Once the collection of the spectral data for a predetermined area of competence has been completed, with the calculation of the spectral indices of the monitoring zones of each area of competence, the method can provide (NO) for a calculation step 607 of a work parameter of the administration device 40 or of a work parameter of the mobile device 2 designed to operate on a predetermined area of competence.

## Land maintenance system 200

The present invention does not comprise a land maintenance system 200, for example turfgrass, gardens or agricultural land, comprising a monitoring system 100 of the previously described type. In particular, the monitoring system of the land maintenance system includes at least the first detector 3, the second detector 5 and the control unit 50. It should be made clear that, even if in the following description of the land maintenance method according to the present invention particular reference will be made to spectral parameters and spectral indices, what described with particular reference to spectral parameters and spectral indices has a more general value, and can therefore be extended to any monitoring parameter and to any monitoring index, therefore also to the climatic parameters and climatic indexes.

As previously described in relation to the monitoring system 100, the first detector 3 is configured to detect at least one monitoring parameter, the latter comprising at least one of a spectral parameter or a temperature and/or moisture and/or brightness information.

Similarly, the control unit 50 is configured to receive the spectral parameters and to obtain the spectral indices related to each monitoring zone starting from the respective spectral parameters: the control unit 50 is then configured to make an association between the position information of a monitoring zone and the spectral index detected in correspondence with that monitoring zone. Similarly, the control unit 50 can be configured to receive the temperature and/or moisture signals detected by the temperature and moisture sensors 6, 7 in correspondence with a monitoring zone, and to associate them with the position information related to this monitoring zone.

The control unit 50 of the maintenance system 200 is also configured to interface with a maintenance device commanded to carry out at least one maintenance operation in the work area according to the monitoring parameter, in particular according to at least one of the following: a value of the spectral index, a value of the spectral parameter, a temperature value and/or a moisture and/or brightness value. The step of commanding the maintenance device to carry out at least one maintenance operation also depends on the position information. In other words, according to the monitoring index detected by the monitoring system 100 and/or according to the soil or air temperature and moisture values, the control unit 50 of the maintenance system 200 is configured to activate, deactivate, or set the maintenance device in correspondence with the monitoring zones identified by the position information. The step of commanding the maintenance device provides a sub-step of comparison wherein the control unit 50 is configured to compare the value of the spectral index and/or of the spectral parameter corresponding to one or more monitoring zones with a predetermined threshold value.

The maintenance device 40 can be the mobile device 2 of the type as described above, for example a self-driving robot lawnmower, wherein the monitoring system is directly integrated into the mobile device 2 or wherein it comprises the monitoring device which can be associated with the device mobile 2. In this case, the method according to the present invention allows, among other things, to set parameters of the mobile device 2 such as for example the advancement speed and the height of the blade. The control unit 50 is therefore configured to control a movement or an arrest of the mobile device 2 within the work area, according to the position information and the monitoring parameter, in particular according to at least one of the following: a spectral index, a spectral parameter, a climatic index, a climatic parameter, a temperature and/or temperature information: in other words, the control unit 50 of the maintenance system 200 is configured to drive the mobile device 2 in the work area and in particular in correspondence with portions of the work area that require such maintenance, selected on the basis of the monitoring parameters. For example, if the monitoring system 100 detects the presence of tall grass (NDVI or NDRE value higher than a predetermined threshold) in correspondence with one or more monitoring zones, the control unit 50 of the maintenance system 200 is configured for controlling the movement of the mobile device 2 towards these monitoring zones and activating its rotating blade 4 to carry out the cutting operations. Furthermore, if the monitoring system comprises two or more mobile devices 2, each area of competence can be served by a respective mobile device.

The maintenance device can also or alternatively be a device 40 for administering a substance, for example an irrigation circuit comprising one or more sprayers or drippers 40a, 40b, 40c, 40d arranged in the work area 1 (see figures 1, 2 and 2a), preferably in correspondence with perimeter zones of the work area 1. The administration device also comprises at least one shut-off device, such as for example a valve, automatically controllable by means of an actuator preferably connected to the control unit 50 and apt to determine the delivery or not of the substance to be administered in the work area. Preferably, each sprayer or dripper 40a, 40b, 40c, 40d is identified and operative in correspondence with a predetermined area of competence 1a, 1b, 1c, 1d: for example the sprayer 40a is intended to administer the substance in correspondence with the area of competence 1a, the sprayer 40b is intended to administer the substance in correspondence with the area of competence 1b, the sprayer 40c is intended to administer the substance in correspondence with the area of competence 1c, and the sprayer 40d is intended to administer the substance in correspondence with the area of competence 1d. Furthermore, it is possible that a single sprayer 40 can operate in correspondence with more than one area of competence: for example it is possible that the sprayer 40c is configured to administer the substance in correspondence of the areas of competence 1 a, 1b and 1c (for example by varying the orientation). The position of each sprayer is memorized and sent to the control unit 50, so that the latter can selectively operate (in particular according to the identified water requirement of the areas of competence) one or more sprayers in correspondence with one or more areas of competence.

The administration of the substance by means of the administration device 40 can determine an irrigation of the soil in the area of competence served by the administration device 40 or a cooling of the soil in the area of competence served by the administration device 40. In this second case (cooling of the soil), the so-called "Syringing" technique can be conveniently adopted, intended primarily to preserve the turfgrass from high temperatures and strong solar radiation (which would cause photosynthesis to stop and stomata to close), while limiting water consumption (as irrigation values are reduced, yet sufficient to remove heat from the turfgrass, using this heat to evaporate). According to the present invention, the "Syringing" technique advantageously provides for administering the substance, for example water, for a rather limited time, for example about 2 minutes. According to a possible control logic, the Syringing technique can be performed according to the temperature detected by the monitoring system, for example if the air or ground temperature is above a threshold level. Furthermore, this technique can be performed according to further parameters, such as for example a brightness parameter. By way of example, if the monitoring system 100 detects a value of a monitoring parameter, for example the spectral index WBI, representative of lack of water in the soil, the control unit 50 of the maintenance system 200 is configured for controlling the administration device 40 to supply water and/or fertilizer by means of one or more sprayers in the zones of the work area 1 which need it most. This advantageously allows to supply the substance, such as water or fertilizer, according to the actual conditions of the soil and in correspondence with the monitoring zones or the areas of competence of the work area 1 requiring such maintenance: this advantageously involves a reduction in the use of water and fertilizer. The monitoring system 100 provides, by means of the second detector 5, the position information related to each monitoring zone of the work area 1: therefore, since each monitoring parameter is associated with a given monitoring zone, the control 50 is capable of activating one or more devices 40 for administering the substance, in particular at least one of the sprayers 40a, 40b, 40c, and 40d, in correspondence with the monitoring zones or areas of competence requiring such maintenance. For example, if one or more monitoring zones within the area of competence 1c have monitoring parameter values that lie outside the predetermined threshold value, the control unit 50 is configured to activate at least the sprayer 40c configured to administer the substance at least in the area of competence 1c.

Furthermore, according to the position information and the monitoring parameter related to one or more monitoring zones within an area of competence, the control unit 50 is configured to set a work parameter of one or more devices for the administration of substances or of the mobile device 2.

A work parameter of the mobile device 2 can comprise a cutting height, a cutting program, a cutting frequency, a cutting time, a stop time and a planning of the portions of the work area 1 where to operate. A work parameter of the device for the administration can include an orientation of the device for the administration, a flow rate of administered substance, a program of administration, a frequency of administration, a time of administration, a stop time, a program of portions of the work area where to carry out an administration.

In summary, the maintenance system 200 makes it possible to identify the area where to operate according to the information obtained from the first and second detector 3, 5, to activate the device or devices for the administration 40 operating in that area, and to further vary the aforementioned work parameters.

The control unit 50 is further configured to estimate an expected growth of the vegetation present within the work area according to the monitoring parameters detected by the first detector 3: the expected growth in correspondence with a monitoring zone can be based on the environmental or soil temperature and moisture value in that monitoring zone, or in combination it can be based on the value of the spectral index detected in that monitoring zone. Moreover, the control unit can be further configured to acquire at least one meteorological parameter related to the work area 1 and, according to this meteorological parameter, estimate the expected growth: the meteorological parameter can include temperature, moisture, presence and/or forecast of rainfall. Advantageously, the control unit 50 of the maintenance system can combine the information obtained from the monitoring system 100, and in particular obtained from the first detector 3 and optionally from the temperature and moisture sensor, with the information obtained from the meteorological parameter, in order to reliably estimate the expected growth of the turfgrass.

The information regarding the expected growth can be further processed by the control unit 50 to determine one or more the work parameters of the maintenance device 40: for example, depending on the expected growth, the substance flow rate or the frequency of administration or the administration timing of the administration device can be varied or programmed. Also, depending on the expected growth, the cutting height, the cutting frequency or the cutting times can be varied or programmed.

According to a further embodiment, the control unit 50 of the maintenance system 200 can be configured to control the maintenance device, in particular to control the mobile device 2, and/or to control the administration device 40, according to the information obtained from the meteorological parameter: for example, if the information of the meteorological parameter forecast or indicate the presence of rainfall, the control unit 50 can be configured to stop or postpone the irrigation operations by means of the administration device 40, or can be configured to stop or move the mobile device 2 towards a storage spot. Similarly, if the meteorological parameter forecasts or indicates high temperature or the presence of high concentrations of solar radiation, the control unit 50 can be configured to activate the administration device 40 in order to moisturize the soil and at the same time to reduce the temperature of the turfgrass (preferably using the "Syringing" technique).

The maintenance system 200 is further configured to transmit to the remote server 23 or to the remote device 20 one or more pieces of information about the maintenance operations carried out or a suggestion on the maintenance operations to be carried out in the near future within the work area, a program of the maintenance operations to be carried out, the health condition of the soil and in particular of each monitoring zone in the work area, the type of maintenance required by one or more monitoring zones, information about the hydration condition of the soil and/or a detected temperature value: the remote device 20 is therefore designed to display this piece of information on the screen so as to share it with the operator. In turn, the remote device 20 can be configured to receive from the operator one or more input commands to activate a maintenance procedure, accept a maintenance operation proposed by the maintenance system 200, anticipate or postpone a maintenance operation.

The maintenance system 200 is also designed, as previously described in relation to the monitoring system 100, to memorize and archive the parameters detected by the monitoring system, in particular by the first detector 3, by the second detector 5: the maintenance system is therefore configured to estimate a variation of one or more parameters representative of the work area, and, as a function of this variation, determine one or more maintenance operations to be carried out within the work area 1.

**Maintenance method**

The land maintenance method,which is not part of the invention, substantially provides for implementing the operational steps of the maintenance system 200 and of the monitoring system 100 which have been previously disclosed and which the control unit 50 is configured to perform, such steps being referred to and incorporated herein. It should be noted that, although in the following description of the land maintenance method particular reference will be made to spectral parameters and spectral indices, what has been described with particular reference to spectral parameters and spectral indices has a more general value, and it can therefore extend to any monitoring parameter and to any monitoring index, therefore also to climatic parameters and climatic indices.

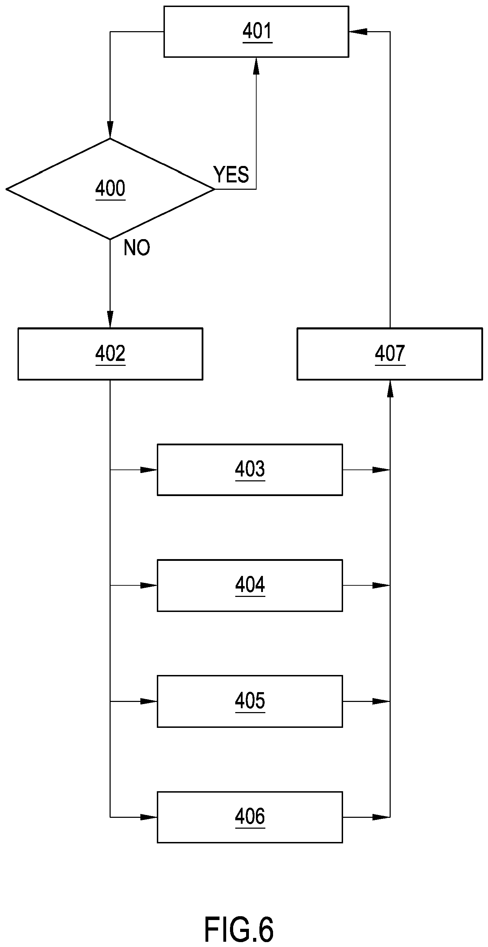

By way of example, figure 6 shows a flow chart comprising some steps of the maintenance method according to a preferential operating mode: in particular, the land maintenance method provides an initial step 400 for monitoring the health conditions of a monitoring zone of the work area according to the spectral parameters and/or the spectral index obtained in correspondence with this monitoring zone: if the health condition is good (YES), the method provides for the step 401 to continue monitoring, otherwise (NO) the method provides for a step 402 to carry out at least one maintenance operation. This maintenance operation 402 can provide at least one step between controlling 403 a movement/arrest of the mobile device 2 to carry out maintenance operations within the work area 1, activating/deactivating 404 the payload of the mobile device 2, in particular the rotating blade 4, to administer 405 a substance, in particular water and/or fertilizer, by means of the administration device 40. Furthermore, this maintenance operation 402 can provide for a step 406 of setting a work parameter of the mobile device, for example the cutting height, the cutting program, the cutting frequency, the cutting time, the stop time, the planning of the portions of the work area where to operate, or a work parameter of the device for the administration, such as the frequency of irrigation or the flow rate of this substance.

As examples given by way of explanation but not as a limitation of the maintenance operations referred to in steps from 403 to 405, the inhibition of cutting operations in the monitoring zones with poor health condition of turfgrass can be considered, as well as the increment in the frequency of activation of irrigation.

The maintenance method can also provide the step 407 of assessing the evolution of spectral indices and/or spectral parameters to identify any improvements or deterioration in the health of the turfgrass of the work area over time. For example, the method can provide for storing data history related to the spectral indices or spectral parameters of the work area, in particular of each monitoring zone of the work area, and display such data to assess their progression. Depending on the progression of these data, the maintenance system can further implement the above mentioned maintenance operations: in this way, one or more parameters of maintenance operations, such as the cutting height or the irrigation frequency and irrigation flow rate, can be set according to a prediction of the spectral indices or parameters, in order to restore independently the vegetation to a good state of health. Some possible embodiments of the maintenance method, each of which autonomously presents characteristics that must be recognized as involving inventive activity, are reported below, for explanatory but not limitative purposes.

A first possible embodiment is based on the detection of dormancy. In this embodiment, the monitoring system verifies whether distinct conditions representative of the entry into the dormancy period are achieved simultaneously: the cold season coming up in the calendar, decreasing temperatures, constant decrease in the NDRE index, negligible turfgrass growth. If all the conditions are verified, the mobile device operation (and consequently the cutting of the turfgrass) is inhibited until a subsequent detection of exit from the state of dormancy.

Given that the entry into dormancy implies a physiological decrease in the vegetative parameters, the detection of dormancy has a significant impact on the management of the work area, so this detection is advantageously carried out after any further detection concerning the turfgrass of the work area.

A second possible embodiment is based on monitoring the WBI index. Since the WBI index is representative of the quantity of water present in the leaves of the vegetation (as based on the water content of the cells, the chlorophyll molecules are arranged differently in the leaf, varying the spectral response of the vegetation), by obtaining the WBI index from the spectral parameters it is possible to determine the quantity of water that the vegetation has in each monitoring zone of the work area. Starting from the measurement of the WBI index of each monitoring zone, it is then possible to determine the activation of the sprayers 40a, 40b, 40c, 40d associated with the areas of competence 1a, 1b, 1c, 1d comprising the monitoring zones wherein a critical value of the WBI index was found. It is also possible to determine a variation in the programming of the irrigation system, for example by increasing the frequency of activation of the sprayers 40a, 40b, 40c, 40d associated with the areas of competence 1a, 1b, 1c, 1d including the monitoring zones wherein a critical value of the WBI index was found, as long as adequate values of the WBI index were not restored.

A third possible embodiment is based on monitoring the NDRE index. Since the NDRE index is representative of vegetative activity and therefore of the vigor of vegetation, in the monitoring zones with a low value of the NDRE index it is ascertained that the turfgrass is in a situation of stress, which may be due to the heat, or the presence of weeds, or the onset of a pathology. Measures can then be taken to reduce turfgrass stress, for example by activating cooling when the temperatures in that period of time are above the tolerance limits of the turfgrass species present in the work area or by adopting a higher height of the blade in the mobile device during cutting operations.

A fourth possible embodiment is based on monitoring the NDVI index. Since the NDVI index is representative of the quantity of biomass, namely the presence of vegetation, if the NDVI index of a monitoring zone is low, it means that in this monitoring zone the grass is thinned or dead, due to a fungal attack or to an object left on the turfgrass for a long time. Also in this case corrective actions are advantageously adopted.

A fifth possible embodiment is based on the simultaneous monitoring of the NDRE and WBI indices. In fact, if the NDRE and WBI indices are both low, this means that the turfgrass is under stress conditions, due to lack of water. Therefore, action is taken on the irrigation system program set for the areas of competence 1a, 1b, 1c, 1d, including monitoring zones wherein low values of the NDRE and WBI indices are found simultaneously. In particular, an increase of the activation times of the irrigation system and/or additional activations of the sprayers 40a, 40b, 40c, 40d can be provided.

A sixth possible embodiment is based on monitoring climatic indices and is in particular aimed at activating the Syringing technique. This activation is determined upon predetermined conditions, such as in particular the non-occurrence of rainfall, the detection of an environmental temperature above a threshold temperature value (which can be fixed or subject to the grass type in the work area, if micro-thermal or macro-thermal type), the detection of a soil temperature above a threshold temperature value, the verification that a predetermined time interval has elapsed since dawn (for example about 5 hours), the verification that a predetermined time interval (for example about 4 hours) is left before sunset, the verification that a predetermined time interval has elapsed from the preceding irrigation (for example about 1 hour).

**300 Land Inspection System**

This Inspection System 300,which is not part of theinvention, is aimed at analyzing land, in particular turfgrass, gardens and agricultural land. According to a preferential embodiment, the inspection system 300 comprises the previously described monitoring system 100 operating within a work area 1 and/or the maintenance system 200: in detail, the monitoring system 100 of the inspection system comprises the control unit 50, which is configured to carry out the steps of obtaining at least one spectral index and associating the position information with this spectral index, similarly to what has already been described for the monitoring system 100.

Briefly, the control unit 50 is configured to obtain at least one spectral index (NDVI, NDRE, WBI) from the spectral parameters related to a monitoring zone of the work area 1 and detected by the first detector 3. The control unit 50 of the inspection system further provides the step of associating the spectral index with the position information, detected by the second detector 5, related to this monitoring zone.

Furthermore, the inspection system can, similarly to what happens for the monitoring system 100 and the maintenance system 200, comprise the mobile device 2 and/or the administration device 40: furthermore, the inspection system can comprise the monitoring device 60 and the remote device 20, as well as the corresponding local control device (50a) and remote control device (50b). The inspection system can also comprise the temperature and moisture sensors as described in relation to the monitoring system 100.

The control unit 50 of the inspection system is further configured to perform a congruence check between an experimental spectral index, detected in correspondence with a monitoring zone by means of the first detector 3, and at least an expected spectral index, wherein the expected spectral index is defined as a spectral index that would be expected to be detected in this monitoring zone.

The expected spectral index can therefore comprise a value or a range of values representative of a spectral index of the inspected monitoring zone: these values can be pre-stored in memory or experimentally obtained from preceding measurements carried out by the first detector 3 and stored in memory. In particular, the expected spectral index associated with a monitoring zone can be determined by calculating an average of the spectral index values obtained experimentally in said monitoring zone during preceding detections.

By way of example, a predetermined monitoring zone, identified by means of the position information detected by the second detector 5, can be associated with an expected spectral index, for example with a value between 0.1 and 0.8, wherein said expected spectral index is advantageously based on a plurality of previously performed detections: in other words, the expected spectral index provides values of the spectral index commonly representative of this monitoring zone. If, during the monitoring operations implemented by the inspection system 300, the control unit 50 obtains in said monitoring zone an experimental spectral index value lying outside this range of values, the control unit 50 is configured, on the basis of this inconsistency, to generate a warning signal about an alleged error or malfunction. The inconsistency between the experimental spectral index and the expected spectral index can be due to a malfunction of the first detector 3, which could provide incorrect spectral parameter values, or it can be due to a malfunction of the second detector 5 which, by providing incorrect position information, causes the control unit 50 to compare the experimental spectral index of a monitoring zone with the expected spectral index of a different monitoring zone.

The inconsistency potentially highlighted by the step of comparison between the expected spectral index and the experimental spectral index therefore allows the inspection system to highlight any malfunctions of one of the components of the system itself (for example insufficient accuracy of the second detector 5 in the position detection) and to warn and inform a user by means of the warning signal, so as to possibly solve the cause and/or adopt appropriate countermeasures.

The warning signal can be an acoustic alarm, a light signal or a combination thereof: the warning signal can be reproduced by the monitoring device 60 through one or more speakers 22 or light sources (for example one or more LEDs) carried by the monitoring device 60 itself, and/or in combination, carried by the remote device 20. The warning signal can comprise chromatic information or a pop-up displayed on the screen 21 of the remote device, so as to warn the operator of the inconsistency detection.

Furthermore, on the basis of this inconsistency, the control unit 50 of the inspection system can be configured to implement a safety operation: in particular the control unit 50 of the inspection system can be configured to perform at least one of the following operations: stopping the movement of the mobile device 2, imposing a deviation on the mobile device 2, stopping the actuation means 2b, in particular the rotating blade, of the mobile device 2. The work area 1 can have a first region, for example adjacent to a contour of the work area, and a second region inside the first region: in particular, the first region can be associated with a higher safety level than the second region, so that the first region requires more attention than the second region. By way of example, the first region can be a perimeter stretch of the work area, so that it could be particularly dangerous if the mobile device 2 goes beyond this perimeter. The second region, on the other hand, could be located in a zone of work area 1 that is particularly far from potential sources of danger: in other words, the first region can present a higher danger level than the potentially determined danger level of the second region. The control unit 50 is then configured to determine whether the second detector 5 and/or the mobile device 2 and/or the monitoring device 60 are likely to be located in the first region or in the second region of the work area 1: the control unit 50 is then configured to subordinate the execution of the congruence check to this detected position. If, for example, it is found that said position corresponds to the first region, the control unit 50 can be configured to carry out the congruence check in such a way as to be substantially certain of the correctness in the detection of this position. Alternatively, if it is found that this position corresponds to the second region, the control unit 50 can be configured to inhibit the congruence check, since a potential uncertainty in detecting the position in this second region would not result in a hazard.

In other words, the congruence check can be subordinated to the danger level represented by the region of the work area wherein the mobile device 2 is likely to be located, in order to increase the safety level of the system.

In the case of a self-driving mobile device 2, being the inspection system according to the present invention capable of distinguishing vegetation from other surfaces, useful information can be provided to the mobile device 2 for example for identifying the perimeter of the cutting area (advantageously the mobile device 2 is informed when it is heading towards an area without turfgrass), for circumventing obstacles situated on the turfgrass (and identified by the inspection system according to the present invention) and for preventing the rotating blade from starting up when the mobile device 2 is not on a suitable surface for operating.

**Inspection method**

The inspection method,which is not part of the invention, substantially provides for implementing the operational steps of the inspection system 300 and the monitoring system 100 described above and that the control unit 50 is configured to perform, such steps being referred to and incorporated herein.

By way of example, figure 7 shows a flow chart comprising some steps of the inspection method according to a preferential operating mode: in particular, the land maintenance method provides for an initial step 500 of receiving position data and spectral parameters and/or indices related to a monitoring zone. The method can further comprise a step 501 of checking whether the position detected by the second detector 5 belongs to a maximum security area of the work area. If this position does not belong to a maximum security area (NO), the method can provide for returning to the data reception step 500. Alternatively, if this position belongs to a maximum safety area (YES), the method can comprise a step 502 for checking the congruence between the expected spectral index and the experimental spectral index: if the expected spectral index is congruent with the experimental spectral index (YES), the method provides for a non-alarm step 503 and a return to the data reception step 500. Alternatively, if the expected spectral index is not congruent with the experimental spectral index (NO), the method involves a step 504 of generating a warning signal. The warning signal generated in step 504 can determine the generation and/or transmission of at least one command addressed to the mobile device 2, in particular a command to stop or to carry out a certain maneuver, or alternatively a command to regulate an operational parameter (for example speed or orientation) or alternatively to deactivate a payload (for example the rotating blade).

According to an advantageous embodiment the congruence check according to step 502 comprises a first congruence check and a second congruence check, in particular based on the NDVI index and the NDRE index respectively. In fact, the Applicant has experimentally verified that the concomitance between NDVI index values between - 0.1 and 0 and NDRE index values between - 0.5 and 0 is representative of surfaces other than grass, in particular cement.

The inspection method is capable of increasing significantly the reliability of the operation of the mobile device 2. For example, a warning signal (then managed by the control unit 50 by controlling the mobile device 2 to perform corrective actions) can be generated in circumstances wherein the detected spectral parameters and/or the calculated spectral indices detect the intrusion or the approach in potentially dangerous regions, such as a road or a swimming pool.

Finally, it should be noted that the inspection method according to the present invention is suited for detecting both surfaces other than grass (earth, tiles, cement, stones) in correspondence with or near the mobile device 2, and any obstacles (toys, stones, animals) placed near the mobile device.

## ADVANTAGES OF THE INVENTION

The present invention allows to achieve significant advantages.

Suffice it to recall that the monitoring system and the monitoring method according to the present invention make it possible to obtain a mapping of the work area that describes with reliability and accuracy the health condition of each zone of the work area, allowing to check the evolution of this health condition over time, too. Then, the fact that the mapping can be obtained for example through visualization on a remote device such as a smartphone, ensures the maximum ease of use. The monitoring system and the monitoring method allow the acquisition of relevant and detailed information about the turfgrass being monitored (in particular, it is possible to verify the state of dormancy of the turfgrass).

As for the maintenance system according to the present invention, it is worth noting how the present invention makes it possible to obtain an automated management system for turfgrass, with targeted operations taking into account the specific needs encountered in each zone of the work area being monitored. It should be noted that this maintenance system (based on the detection of monitoring parameters, in particular of spectral parameters) is optimally related to maintenance systems and maintenance methods of different and potentially complementary types (for example based on predictive information obtained from meteorological parameters). It should also be noted that this maintenance system result in a significant optimization of the consumption of resources (electricity, water, fuel) necessary for the care of the turfgrass, making it possible, among other things, a synergy with the most advanced techniques developed in the gardening sector (for example the aforementioned "Syringing" technique).

Finally, the inspection system according to the present invention ensure a significant increase in the safety of the operations of the mobile device. By detecting an incongruent spectral parameter, it is possible to acquire, with extreme timeliness, knowledge about the occurrence of a possible navigation error that has led or is leading the mobile device to deviate from the work area (such deviation typically corresponding with an intrusion into an area where the presence of the mobile device constitutes a potential danger, for example on a driveway) and implement appropriate corrective actions aimed at immediately resolving situations of potential risk or criticality. It is then intended to emphasize how the inspection system and the inspection method according to the present invention can provide for a selective implementation, so that the planned congruence check is omitted if there is substantial certainty that the mobile device is operating in a region of the work area considered safe (as it is sufficiently distant from external and internal contours), thereby obtaining a valid rationalization in the use of the computing resources of the mobile device.

The advantages of the present invention are fully achieved by the system as defined by the following claims.

## Claims

1. Monitoring system (100) for turfgrasses and/or gardens, the monitoring system (100) comprising a mobile device (2) or being fitted to comprise a mobile device (2),

   wherein said monitoring system (100) comprises at least one control unit (50) configured to:

   - receive at least one spectral parameter related to one or more monitoring zones of a work area (1), said at least one spectral parameter being detected by means of at least one first detector (3),
   - receive at least one position information related to the monitoring zone of the spectral parameter, said at least one position information being detected by means of at least a second detector (5),
   - obtain at least one spectral index associated with each monitoring zone starting from the respective at least one spectral parameter,
- carry out an association between said position information and said at least one spectral index,
- access a virtual map (10) representative of said work area (1),
- associate, as a function of said position information, a representative description of said spectral index with at least a predetermined portion (11) of said virtual map (10) and
- display, as a function of said position information, said at least one description on said predetermined portion (11) onto the virtual map (10);

wherein, given any of said one or more monitoring zones, the first detector (3) is configured to perform a plurality of detections of said at least one spectral parameter in correspondence with said monitoring zone, said spectral index related to said monitoring zone being obtained from said plurality of detections of said at least one spectral parameter;

wherein the detection of said at least one spectral parameter of any one of said one or more monitoring zones substantially occurs simultaneously with the detection of the position information of said monitoring zone;

wherein said at least one spectral index is representative of a health condition of said one or more monitoring zones and

wherein said description allows to distinguish:

- regions of said work area (1) wherein the health condition is inadequate and which require maintenance;
- regions of said work area (1) wherein the health condition is adequate.

2. Monitoring system (100) according to claim 1, comprising:

- said at least one first detector (3) configured to detect, within said work area (1), at least one spectral parameter related to said one or more monitoring zones of the work area (1); and
- said second detector (5) configured to detect, within said work area (1), at least one position information related to each monitoring zone of the spectral parameter.

3. Monitoring system (100) according to claim 1 or 2, wherein the spectral index of any one of said one or more monitoring zones is obtained by calculating the average between said plurality of detections of said at least one spectral parameter performed within said monitoring zone;

and wherein said virtual map (10) comprises a plurality of said portions (11), each portion (11) being located on the virtual map (10) in a manner corresponding to the location of the respective monitoring zone in the work area (1), each portion (11) being associated with a representative description of the status information of the respective monitoring zone of the work area (1).

4. Monitoring system (100) according to claim 1 or 2 or 3, wherein said virtual map (10) comprises at least one of:

- an image of said work area (1), said image being for example a satellite photographic image of said work area (1), and
- a plurality of geographic coordinates, for example satellite coordinates, defining the conformation of said work area (1);

wherein said description is shown on said virtual map (10):

- in numerical terms, for example by means of a numerical value representative of a corresponding value of said spectral index, and/or
- in a chromatic scale, for example by means of a color representative of a corresponding value of said spectral index;

and wherein each portion (11) of said virtual map (10) has at least one numerical and/or chromatic information, representative of a value of the spectral index of the corresponding monitoring zone within said work area (1), each portion (11) having a circular or polygonal shape, for example square or rectangular or hexagonal, totally or partially covering the virtual map (10) representative of the work area (1).

5. Monitoring system (100) according to any one of the preceding claims, wherein each portion (11) is located on the virtual map (10) as a function of the position information detected by the second detector (5), so that each portion (11) is capable of defining a virtual representation of the corresponding monitoring zone of the work area (1).

6. Monitoring system (100) according to any one of the preceding claims,

wherein said first detector (3) comprises at least one of an optical detector and an infrared detector, in particular of the near infrared;
wherein said spectral index corresponds to said spectral parameter, in particular said spectral index being said spectral parameter, or wherein said at least one spectral index comprises at least one index of NDVI (Normalized Difference Vegetation Index), NDRE (Normalized Difference Red Edge) and WBI (Water Band Index); wherein the first detector (3) is configured to detect said spectral parameter in the presence of natural light or through the contribution of artificial lighting, optionally the monitoring system comprising a source of artificial light; and wherein said position information comprises at least an absolute position or a relative position with respect to a reference element, said second detector (5) comprising at least one of a GNSS (Global Navigation Satellite System) sensor, in particular a sensor implementing the GPS (Global Positioning System) technology, a time-of-flight sensor configured to detect a distance from said reference element and a radar sensor.

7. Monitoring system (100) according to any one of the preceding claims, comprising a monitoring device (60), said monitoring device (60) comprising said at least one first detector (3) and at least a data communication system (51) configured to transmit at a distance at least one of the at least one spectral parameter and the corresponding spectral index,

wherein said monitoring device (60) comprises a local control device (50a), in particular belonging to said control unit (50), said local control device (50a) being configured to receive, from the first detector (3), said at least one spectral parameter and to obtain, starting from said at least one spectral parameter, the respective spectral index;
wherein the monitoring device (60) comprises said second detector (5), wherein the communication system (51) and optionally the local control device (50a) are configured to receive the position information, detected by the second detector (5), related to one or more of said monitoring zones;
wherein the local control device (50a) is configured to associate said position information to said at least one spectral index, so as to define a status information, the communication system (51) being configured to transmit at a distance said status information and
wherein said monitoring device (60) comprises a casing (61), said first detector (3), said second detector (5), said local control device (50a) and optionally said communication system (51) being carried by said casing (61).

8. Monitoring system (100) according to the preceding claim, wherein the monitoring system (100) is configured to detect the at least one spectral parameter and the position information along with a movement of the mobile device (2) within the work area (1), and wherein the monitoring device (60) of the monitoring system (100) is:

- integrated in the mobile device (2), wherein at least the first detector (3), the second detector (5) and the local control device (50a) are integrated in and/or carried by said mobile device (2), optionally said data communication system (51) being further integrated in said mobile device (2), or
- apt to be associated with a mobile device (2) for cutting grass, said monitoring device being fitted with couplings (62) to said mobile device (2), said couplings (62) optionally comprising magnetic and/or mechanical hooks.

9. Monitoring system (100) according to any one of the preceding claims, further comprising a remote device (20), in particular a computer, smartphone, tablet or a remote server such as a cloud service (23), comprising at least one remote control device (50b), in particular belonging to said control unit (50), and at least a corresponding communication system (51) configured to receive, from the communication system (51) of the monitoring device (60), at least one of the spectral parameter, the spectral index, the position information and the description,

wherein the remote device (20) comprises said second position detector (5) configured to detect, for example in an operative condition of the monitoring device, said position information, the remote control device (50b) of the remote device (20) being configured to associate said position information to said at least one spectral index to define said status information;
wherein the communication system (51) of the monitoring device (60) or of the remote device (20) is of the radio frequency type, in particular according to the Bluetooth protocol;
and wherein the remote device (20) comprises a graphic interface (21) configured to display said virtual map (10) comprising said plurality of portions (11), said graphical interface (21) being in particular a screen.

10. Monitoring system (100) according to claim 9, said monitoring system (100) being configured in a first configuration, wherein the communication system (51) of the remote device (20) is configured to receive said at least one spectral parameter transmitted by the communication system (51) of the monitoring device (60), the remote control device (50b) of the remote device (20) being configured to obtain the respective spectral index and optionally the respective description;

11. Monitoring system (100) according to claim 9, said monitoring system (100) being configured in a second configuration, wherein the communication system (51) of the remote device (20) is configured to receive said spectral index transmitted by the communication system (51) of the monitoring device (60), the remote control device (50b) of the remote device (20) being configured to receive said spectral index, the remote control device (50b) of the remote device (20) being optionally configured to obtain the respective description;

12. Monitoring system (100) according to claim 9, said monitoring system (100) being configured in a third configuration, wherein the communication system (51) of the remote device (20) is configured to receive said description transmitted by the communication system (51) of the monitoring device (60), the remote control device (50b) of the remote device (20) being configured to receive said description.

13. Monitoring system (100) according to any one of claims 9 to 12, wherein the remote device (20), at least in an operative condition of said monitoring device (60), is configured to be carried by an operator, in this operative condition the position of the monitoring device (60) being assumed to be coinciding with the position of said remote device (20), in particular the position of the first detector (3) of the monitoring device (60) being assumed to be coinciding with the position of said remote device (20).

14. Monitoring system (100) according to any one of the preceding claims,

wherein the control unit (50) is configured to predict, as a function of the spectral index associated with a monitoring zone of the work area (1), the vegetation growth rate in this monitoring zone;
wherein the monitoring system further comprises at least one of a moisture sensor configured to detect the degree of moisture of the soil, a temperature sensor, and a brightness sensor, one or more of these sensors being connected to the control unit (50), optionally the first detector (3) being configured to detect also at least one of degree of moisture of the soil, temperature and brightness,
wherein at least one of said moisture, temperature and brightness sensors is installed within the work area (1), said control unit (50) being configured to receive the corresponding signals from said sensors and compare said corresponding signals in order to detect any anomalies.

15. Monitoring system (100) according to any one of the preceding claims,

wherein said at least one spectral parameter comprises at least one frequency information detected by the first detector (3) in correspondence with at least one of said monitoring zones, said frequency information comprising at least one of:

- one or more frequency values related to a light signal detected by the first detector (3) in correspondence with at least one of said monitoring zones; and
- at least one intensity associated with at least one of said one or more frequency values,

wherein said at least one spectral parameter comprises at least one spectral reflectance measurement of a light signal obtained from the first detector (3) in correspondence with at least one of said monitoring zones, said at least one spectral reflectance measurement being related to the field of frequencies corresponding to red and near infrared.

**Patentansprüche**

1. Überwachungssystem (100) für Rasen und/oder Gärten, wobei das Überwachungssystem (100) eine mobile Vorrichtung (2) umfasst oder dazu angepasst ist, eine mobile Vorrichtung (2) zu umfassen,

wobei das Überwachungssystem (100) wenigstens eine Steuereinheit (50) umfasst, welche eingerichtet ist zum:

- Empfangen wenigstens eines spektralen Parameters in Bezug auf eine oder mehrere Überwachungszonen eines Arbeitsbereichs (1), wobei der wenigstens eine spektrale Parameter mittels wenigstens eines ersten Detektors (3) detektiert wird,
- Empfangen wenigstens einer Positionsinformation in Bezug auf die Überwachungszone des spektralen Parameters, wobei die wenigstens eine Positionsinformation mittels wenigstens eines zweiten Detektors (5) detektiert wird,
- Erhalten wenigstens eines spektralen index, welcher jeder Überwachungszone zugeordnet ist, ausgehend von dem jeweiligen wenigstens einen spektralen Parameter,
- Ausführen einer Zuordnung zwischen den Positionsinformationen und dem wenigstens einen spektralen index,
- Zugreifen auf eine virtuelle Karte (10), welche für den Arbeitsbereich (1) repräsentativ ist,

- Zuordnen, als eine Funktion der Positionsinformation, einer repräsentativen Beschreibung des spektralen index zu wenigstens einem vorbestimmten Abschnitt (11) der virtuellen Karte (10), und
- Anzeigen, als eine Funktion der Positionsinformation, der wenigstens einen Beschreibung in Bezug auf den vorbestimmten Abschnitt (11) auf der virtuellen Karte (10);

wobei, in Anbetracht einer beliebigen der einen oder der mehreren Überwachungszonen, der erste Detektor (3) dazu eingerichtet ist, eine Mehrzahl von Detektionen des wenigstens einen spektralen Parameters in Übereinstimmung mit der Überwachungszone durchzuführen, wobei der spektrale index in Bezug auf die Überwachungszone aus der Mehrzahl von Detektionen des wenigstens einen spektralen Parameters erhalten wird;
wobei die Detektion des wenigstens einen spektralen Parameters einer beliebigen der einen oder der mehreren Überwachungszonen im Wesentlichen zeitgleich mit der Detektion der Positionsinformation der Überwachungszone auftritt;
wobei der wenigstens eine spektrale Index für einen Gesundheitszustand der einen oder der mehren Überwachungszonen repräsentativ ist, und
wobei die Beschreibung erlaubt, folgendes zu unterscheiden:

- Bereiche des Arbeitsbereichs (1), in welchen der Gesundheitszustand unzureichend ist und welcher eine Pflege erfordert;
- Bereiche des Arbeitsbereichs (1), in welchen der Gesundheitszustand ausreichend ist.

2. Überwachungssystem (100) nach Anspruch 1, umfassend:

- den wenigstens einen ersten Detektor (3), welcher dazu eingerichtet ist, innerhalb des Arbeitsbereichs (1), wenigstens einen spektralen Parameter in Bezug auf die eine oder die mehreren Überwachungszonen des Arbeitsbereichs (1) zu detektieren; und
- den zweiten Detektor (5), welcher dazu eingerichtet ist, innerhalb des Arbeitsbereichs (1), wenigstens eine Positionsinformation in Bezug auf jede Überwachungszone des spektralen Parameters zu detektieren.

3. Überwachungssystem (100) nach Anspruch 1 oder 2, wobei der spektrale index einer beliebigen der einen oder der mehreren Überwachungszonen erhalten wird, indem der Durchschnitt zwischen der Mehrzahl von Detektionen des wenigstens einen spektralen Parameters berechnet wird, welche innerhalb der Überwachungszone durchgeführt werden; und wobei jede virtuelle Karte (10) eine Mehrzahl der Abschnitte (11) umfasst, wobei jeder Abschnitt (11) in einer Weise auf der virtuellen Karte (10) angeordnet ist, welche dem Ort der jeweiligen Überwachungszone in dem Arbeitsbereich (1) entspricht, wobei jeder Abschnitt (11) einer repräsentativen Beschreibung der Statusinformationen der jeweiligen Überwachungszone des Arbeitsbereichs (1) zugeordnet ist.

4. Überwachungssystem (100) nach Anspruch 1 oder 2 oder 3, wobei die virtuelle Karte (10) wenigstens eines der folgenden umfasst:

- ein Bild des Arbeitsbereichs (1), wobei das Bild beispielsweise ein fotografisches Satellitenbild des Arbeitsbereichs (1) ist, und
- eine Mehrzahl geographischer Koordinaten, beispielsweise Satellitenkoordinaten, welche die Gestalt des Arbeitsbereichs (1) definieren;

wobei die Beschreibung auf der virtuellen Karte (10) wie folgt gezeigt ist:

- in numerischen Ausdrücken, beispielsweise mittels eines numerischen Werts, welcher für einen entsprechenden Wert des spektralen index repräsentativ ist, und/oder
- in einer chromatischen Skala, beispielsweise mittels einer Farbe, welche für einen entsprechenden Wert des spektralen index repräsentativ ist;

und wobei jeder Abschnitt (11) der virtuellen Karte (10) wenigstens eine numerische und/oder chromatische Information aufweist, welche für einen Wert des spektralen index der entsprechenden Überwachungszone innerhalb des Arbeitsbereichs (1) repräsentativ ist, wobei jeder Abschnitt (11) eine kreisförmige oder polygonartige Form aufweist, beispielsweise quadratisch oder rechteckig oder hexagonal, die virtuelle Karte (10), welche für den Arbeitsbereich (1) repräsentativ ist, ganz oder teilweise bedeckend.

5. Überwachungssystem (100) nach einem der vorhergehenden Ansprüche, wobei jeder Abschnitt (11) auf der virtuellen Karte (10) als eine Funktion der Positionsinformation angeordnet ist, welche durch den zweiten Detektor (5) detektiert wird, so dass jeder Abschnitt (11) dazu in der Lage ist, eine virtuelle Repräsentation der entsprechenden Überwachungszone des Arbeitsbereichs (1) zu definieren.

**6.** Überwachungssystem (100) nach einem der vorhergehenden Ansprüche, wobei der erste Detektor (3) wenigstens eines aus einem optischen Detektor und einem Infrarotdetektor, insbesondere des Nah-Infrarot-Typs, umfasst;

wobei der spektrale index dem spektralen Parameter entspricht, wobei der spektrale index insbesondere der spektrale Parameter ist, oder wobei der wenigstens eine spektrale index wenigstens einen index aus NDVI (Normalized Difference Vegetation Index), NDRE (Normalized Difference Red Edge) und WBI (Water Band Index) umfasst;

wobei der erste Detektor (3) dazu eingerichtet ist, den spektralen Parameter bei der Präsenz natürlichen Lichts oder durch den Beitrag künstlichen Lichts zu detektieren, wobei das Überwachungssystem optional eine Quelle künstlichen Lichts umfasst; und wobei die Positionsinformation wenigstens eine absolute Position oder eine relative Position in Bezug auf ein Referenzelement umfasst, wobei der zweite Detektor (5) wenigstens eines aus einem GNSS (Global-Satellitennavigationssystem)-Sensor, insbesondere einem Sensor, welcher GPS (globales Positionierungssystem)-Technologie implementiert, einem Time-of-Flight-Sensor, welcher dazu eingerichtet ist, einen Abstand von dem Referenzelement zu detektieren, und einem Radarsensor umfasst.

**7.** Überwachungssystem (100) nach einem der vorhergehenden Ansprüche, umfassend

eine Überwachungsvorrichtung (60), wobei die Überwachungsvorrichtung (60) wenigstens einen ersten Detektor (3) und wenigstens ein Datenkommunikationssystem (51) umfasst, welches dazu eingerichtet ist, bei einem Abstand wenigstens eines aus dem wenigstens einen spektralen Parameter und dem entsprechenden spektralen index zu übertragen, wobei die Überwachungsvorrichtung (60) eine lokale Steuervorrichtung (50a) umfasst, welche insbesondere zu der Steuereinheit (50) gehört, wobei die lokale Steuervorrichtung (50a) dazu eingerichtet ist, von dem ersten Detektor (3), den wenigstens einen spektralen Parameter zu empfangen und, ausgehend von dem wenigstens einen spektralen Parameter, den jeweiligen spektralen index zu erhalten; wobei die Überwachungsvorrichtung (60) den zweiten Detektor (5) umfasst, wobei das Kommunikationssystem (51) und optional die lokale Steuervorrichtung (50a) dazu eingerichtet sind, die durch den zweiten Detektor (5) detektierte Positionsinformation in Bezug auf eine oder mehrere der Überwachungszonen zu empfangen;

wobei die lokale Steuervorrichtung (50a) dazu eingerichtet ist, die Positionsinformation zu dem wenigstens einen spektralen index zuzuordnen, um eine Statusinformation zu definieren, wobei das Kommunikationssystem (51) dazu eingerichtet ist, bei einem Abstand die Statusinformation zu übertragen, und wobei die Überwachungsvorrichtung (60) ein Gehäuse (61) umfasst, wobei der erste Detektor (3), der zweite Detektor (5), die lokale Steuervorrichtung (50a) und optional das Kommunikationssystem (51) durch das Gehäuse (61) getragen sind.

**8.** Überwachungssystem (100) nach dem vorhergehenden Anspruch, wobei das Überwachungssystem (100) dazu eingerichtet ist, den wenigstens einen spektralen Parameter und die Positionsinformation zusammen mit einer Bewegung der mobilen Vorrichtung (2) innerhalb des Arbeitsbereichs (1) zu detektieren, und wobei die Überwachungsvorrichtung (60) des Überwachungssystems (100):

- in die mobile Vorrichtung (2) integriert ist, wobei wenigstens der erste Detektor (3), der zweite Detektor (5) und die lokale Steuervorrichtung (50a) in die mobile Vorrichtung (2) integriert oder durch diese getragen sind, wobei optional das Datenkommunikationssystem (51) ferner in die mobile Vorrichtung (2) integriert ist, oder
- dazu geeignet ist, einer mobilen Vorrichtung (2) zum Schneiden von Gras zugeordnet zu sein, wobei die Überwachungsvorrichtung mit Kopplungen (62) mit der mobilen Vorrichtung (2) ausgestattet ist, wobei die Kopplungen (62) optional magnetische und/oder mechanische Haken umfassen.

**9.** Überwachungssystem (100) nach einem der vorhergehenden Ansprüche, ferner umfassend eine entfernte Vorrichtung (20), insbesondere einen Computer, ein Smartphone, ein Tablet oder einen entfernten Server wie einen Cloud-Service (23), umfassend wenigstens eine Fernsteuervorrichtung (50b), welche insbesondere zu der Steuereinheit (50) gehört, und wenigstens ein entsprechendes Kommunikationssystem (51), welches dazu eingerichtet ist, von dem Kommunikationssystem (51) der Überwachungsvorrichtung (60), wenigstens eines aus dem spektralen Parameter, dem spektralen index, der Positionsinformation und der Beschreibung zu empfangen,

wobei die entfernte Vorrichtung (20) den zweiten Positionsdetektor (5) umfasst, welcher dazu eingerichtet ist, beispielsweise in einem Betriebszustand der Überwachungsvorrichtung, die Positionsinformation zu detektieren, wobei die Fernsteuervorrichtung (50b) der entfernten Vorrichtung (20) dazu eingerichtet ist, die Positionsinformation zu dem wenigstens einen spektralen index zuzuordnen, um die Statusinformation zu definieren;

wobei das Kommunikationssystem (51) der Überwachungsvorrichtung (60) oder der entfernten Vorrichtung (20) vom Funk-Frequenz-Typ, insbesondere gemäß dem Bluetooth-Protokoll, ist;

und wobei die entfernte Vorrichtung (20) eine grafische Schnittstelle (21) umfasst, welche dazu eingerichtet ist, die virtuelle Karte (10) anzuzeigen, welche die Mehrzahl von Abschnitten (11) umfasst, wobei die grafische Schnittstelle (21) insbesondere ein Bildschirm ist.

10. Überwachungssystem (100) nach Anspruch 9, wobei das Überwachungssystem (100) in einer ersten Konfiguration eingerichtet ist, in welcher das Kommunikationssystem (51) der entfernten Vorrichtung (20) dazu eingerichtet ist, den wenigstens einen spektralen Parameter zu empfangen, welcher durch das Kommunikationssystem (51) der Überwachungsvorrichtung (60) übertragen wird, wobei die Fernsteuervorrichtung (50b) der entfernten Vorrichtung (20) dazu eingerichtet ist, den jeweiligen spektralen index und optional die jeweilige Beschreibung zu erhalten.

11. Überwachungssystem (100) nach Anspruch 9, wobei das Überwachungssystem (100) in einer zweiten Konfiguration eingerichtet ist, wobei das Kommunikationssystem (51) der entfernten Vorrichtung (20) dazu eingerichtet ist, den spektralen index zu empfangen, welcher durch das Kommunikationssystem (51) der Überwachungsvorrichtung (60) übertragen wird, wobei die Fernsteuervorrichtung (50b) der entfernten Vorrichtung (20) dazu eingerichtet ist, den spektralen index zu empfangen, wobei die Fernsteuervorrichtung (50b) der entfernten Vorrichtung (20) optional dazu eingerichtet ist, die jeweilige Beschreibung zu erhalten.

12. Überwachungssystem (100) nach Anspruch 9, wobei das Überwachungssystem (100) in einer dritten Konfiguration eingerichtet ist, wobei das Kommunikationssystem (51) der entfernten Vorrichtung (20) dazu eingerichtet ist, die Beschreibung zu empfangen, welche durch das Kommunikationssystem (51) der Überwachungsvorrichtung (60) übertragen wird, wobei die Fernsteuervorrichtung (50b) der entfernten Vorrichtung (20) dazu eingerichtet ist, die Beschreibung zu empfangen.

13. Überwachungssystem (100) nach einem der Ansprüche 9 bis 12, wobei die entfernte Vorrichtung (20), wenigstens in einem Betriebszustand der Überwachungsvorrichtung (60), dazu eingerichtet ist, durch einen Bediener getragen zu werden, wobei in diesem Betriebszustand angenommen wird, dass die Position der Überwachungsvorrichtung (60) mit der Position der entfernten Vorrichtung (20) zusammenfällt, wobei insbesondere angenommen wird, dass die Position des ersten Detektors (3) der Überwachungsvorrichtung (60) mit der Position der entfernten Vorrichtung (20) zusammenfällt.

14. Überwachungssystem (100) nach einem der vorhergehenden Ansprüche, wobei die Steuereinheit (50) dazu eingerichtet ist, als eine Funktion des spektralen index, welcher einer Überwachungszone des Arbeitsbereichs (1) zugeordnet ist, die Vegetation-Wachstumsrate in dieser Überwachungszone vorherzusagen;

wobei das Überwachungssystem ferner wenigstens eines aus einem Feuchtigkeitssensor, welcher dazu eingerichtet ist, den Grad einer Feuchtigkeit des Bodens zu detektieren, einem Temperatursensor, und einem Helligkeitssensor umfasst, wobei einer oder mehrere dieser Sensoren mit der Steuereinheit (50) verbunden sind, wobei optional der erste Detektor (3) dazu eingerichtet ist, ebenfalls wenigstens eines aus einem Grad einer Feuchtigkeit des Bodens, einer Temperatur und einer Helligkeit zu detektieren,

wobei wenigstens einer aus dem Feuchtigkeitssensor, dem Temperatursensor und dem Helligkeitssensor innerhalb des Arbeitsbereichs (1) installiert ist, wobei die Steuereinheit (50) dazu eingerichtet ist, die entsprechenden Signale von den Sensoren zu empfangen und die entsprechenden Signale zu vergleichen, um Anomalien zu detektieren.

15. Überwachungssystem (100) nach einem der vorhergehenden Ansprüche, wobei der wenigstens eine spektrale Parameter wenigstens eine Frequenzinformation umfasst, welche durch den ersten Detektor (3) in Übereinstimmung mit wenigstens einer der Überwachungszonen detektiert wird, wobei die Frequenzinformation wenigstens eines umfasst aus:

- einem oder mehreren Frequenzwerten in Bezug auf ein Lichtsignal, welches durch den ersten Detektor (3) in Übereinstimmung mit wenigstens einer der Überwachungszonen detektiert wird; und

- wenigstens einer Intensität, welche wenigstens einem des einen oder der mehreren Frequenzwerte zugeordnet ist,

wobei der wenigstens eine spektrale Parameter wenigstens eine spektrale Reflexionsmessung eines Lichtsignals umfasst, welches von dem ersten Detektor (3) in Übereinstimmung mit wenigstens einer der Überwachungszonen erhalten wird, wobei sich die wenigstens eine spektrale Reflexionsmessung auf die Frequenzbereiche bezieht, welche rot und Nah-Infrarot entsprechen.

## Revendications

1. Système de surveillance (100) pour gazons et/ou jardins, le système de surveillance (100) comprenant un dispositif mobile (2) ou étant ajusté pour comprendre un dispositif mobile (2),

> ledit système de surveillance (100) comprenant au moins une unité de commande (50) conçue pour :
>
> > - recevoir au moins un paramètre spectral lié à une ou plusieurs zones de surveillance d'une zone de travail (1), ledit au moins un paramètre spectral étant détecté à l'aide d'au moins un premier détecteur (3),
> > - recevoir au moins une information de position liée à la zone de surveillance du paramètre spectral, ladite au moins une information de position étant détectée à l'aide d'au moins un second détecteur (5),
> > - obtenir au moins un indice spectral associé à chaque zone de surveillance en commençant à partir du au moins un paramètre spectral respectif,
> > - effectuer une association entre ladite information de position et ledit au moins un indice spectral,
> > - accéder à une carte virtuelle (10) représentative de ladite zone de travail (1),
> > - associer, comme une fonction de ladite information de position, une description représentative dudit indice spectral à au moins une portion (11) prédéterminée de ladite carte virtuelle (10) et
> > - afficher, comme une fonction de ladite information de position, ladite au moins une description sur ladite portion (11) prédéterminée sur la carte virtuelle (10) ;
>
> étant donné l'une quelconque desdites une ou plusieurs zones de surveillance, le premier détecteur (3) étant conçu pour effectuer une pluralité de détections dudit au moins un paramètre spectral en correspondance de ladite zone de surveillance, ledit indice spectral lié à ladite zone de surveillance étant obtenu à partir de ladite pluralité de détections dudit au moins un paramètre spectral ;
la détection dudit au moins un paramètre spectral selon l'une quelconque desdites une ou plusieurs zones de surveillance apparaissant sensiblement simultanément à la détection des informations de position de ladite zone de surveillance ;
ledit au moins un indice spectral étant représentatif d'un état de santé desdites une ou plusieurs zones de surveillance et
ladite description permettant d'effectuer une distinction :

- des régions de ladite zone de travail (1) dans lesquelles l'état de santé est inadéquat et qui nécessite de l'entretien ;
- des régions de ladite zone de travail (1) dans lesquelles l'état de santé est adéquat.

2. Système de surveillance (100) selon la revendication 1, comprenant :

- ledit au moins un premier détecteur (3) conçu pour détecter, à l'intérieur de ladite zone de travail (1), au moins un paramètre spectral lié auxdites une ou plusieurs zones de surveillance de la zone de travail (1) ; et
- ledit second détecteur (5) conçu pour détecter, à l'intérieur de ladite zone de travail (1), au moins une information de position liée à chaque zone de surveillance du paramètre spectral.

3. Système de surveillance (100) selon la revendication 1 ou 2, l'indice spectral de n'importe laquelle desdites une ou plusieurs zones de surveillance étant obtenu en calculant la moyenne entre ladite pluralité de détections dudit au moins un paramètre spectral effectué à l'intérieur de ladite zone de surveillance ;
et ladite carte virtuelle (10) comprenant une pluralité desdites portions (11), chaque portion (11) étant localisée sur la carte virtuelle (10) d'une manière correspondant à la localisation de la zone de surveillance respective dans la zone de travail (1), chaque portion (11) étant associée à une description représentative des informations d'état de la zone de surveillance respective de la zone de travail (1).

4. Système de surveillance (100) selon la revendication 1 ou 2 ou 3, ladite carte virtuelle (10) comprenant au moins l'une de :

- une image de ladite zone de travail (1), ladite image étant par exemple une image de photographie par satellite de ladite zone de travail (1), et
- une pluralité de coordonnées géographiques, par exemple de coordonnées satellites, définissant la conformation de ladite zone de travail (1) ;

ladite description étant montrée sur ladite carte virtuelle (10) :

- en termes numériques, par exemple à l'aide d'une valeur numérique représentative d'une valeur correspondante dudit indice spectral, et/ou
- sur une échelle chromatique, par exemple à l'aide d'une couleur représentative d'une valeur correspondante dudit indice spectral ;

et chaque portion (11) de ladite carte virtuelle (10) ayant au moins une information numérique et/ou chromatique, représentative d'une valeur de l'indice spectral de la zone de surveillance correspondante à l'intérieur de ladite zone de travail (1), chaque portion (11) ayant une forme circulaire ou polygonale, par exemple carrée ou rectangulaire ou hexagonale, recouvrant totalement ou partiellement la carte virtuelle (10) représentative de la zone de travail (1).

5. Système de surveillance (100) selon l'une quelconque des revendications précédentes, chaque portion (11) étant localisée sur la carte virtuelle (10) comme une fonction des informations de position détectées par le second détecteur (5), de sorte que chaque portion (11) est capable de définir une représentation virtuelle de la zone de surveillance correspondante de la zone de travail (1).

6. Système de surveillance (100) selon l'une quelconque des revendications précédentes,

ledit premier détecteur (3) comprenant au moins l'un d'un détecteur optique et d'un détecteur infrarouge, en particulier du proche infrarouge ; ledit indice spectral correspondant audit paramètre spectral, en particulier ledit indice spectral étant ledit paramètre spectral, ou ledit au moins un indice spectral comprenant au moins un indice de NDVI (Indice de végétation par différence normalisée), NDRE (Indice de la limite rouge par différence normalisée) et WBI (Indice de bande d'eau) ;
le premier détecteur (3) étant conçu pour détecter ledit paramètre spectral en présence de lumière naturelle ou à travers la contribution d'un éclairage artificiel, éventuellement le système de surveillance comprenant une source de lumière artificielle ;
et lesdites informations de position comprenant au moins une position absolue ou une position relative par rapport à un élément de référence, ledit second détecteur (5) comprenant au moins l'un d'un capteur GNSS (Système mondial de navigation par satellite), en particulier un capteur mettant en oeuvre la technologie GPS (Système mondial de localisation), un capteur à temps-de-vol conçu pour détecter une distance depuis ledit élément de référence et un capteur radar.

7. Système de surveillance (100) selon l'une quelconque des revendications précédentes,

comprenant un dispositif de surveillance (60), ledit dispositif de surveillance (60) comprenant ledit au moins un premier détecteur (3) et au moins un système de communication de données (51) conçu pour transmettre à une distance au moins l'un du au moins un paramètre spectral et de l'indice spectral correspondant, ledit dispositif de surveillance (60) comprenant un dispositif de commande local (50a), en particulier appartenant à ladite unité de commande (50), ledit dispositif de commande local (50a) étant conçu pour recevoir, du premier détecteur (3), ledit au moins un paramètre spectral et pour obtenir, en commençant à partir dudit au moins un paramètre spectral, l'indice spectral respectif ;
le dispositif de surveillance (60) comprenant ledit second détecteur (5), le système de communication (51) et éventuellement le dispositif de commande local (50a) étant conçus pour recevoir les informations de position, détectées par le second détecteur (5), liées à l'une ou plusieurs desdites zones de surveillance ;
le dispositif de commande local (50a) étant conçu pour associer lesdites informations de position audit au moins un indice spectral, afin de définir une information de statut, le système de communication (51) étant conçu pour transmettre à une distance lesdites informations de statut et
ledit dispositif de surveillance (60) comprenant un boîtier (61), ledit premier détecteur (3), ledit second détecteur (5), ledit dispositif de commande local (50a) et éventuellement ledit système de communication (51) étant portés par ledit boîtier (61).

8. Système de surveillance (100) selon la revendication précédente, le système de surveillance (100) étant conçu pour détecter le au moins un paramètre spectral et les informations de position conjointement à un mouvement du dispositif mobile (2) à l'intérieur de la zone de travail (1), et
le dispositif de surveillance (60) du système de surveillance (100) étant :

- intégré dans le dispositif mobile (2), au moins le premier détecteur (3), le second détecteur (5) et le dispositif de commande local (50a) étant intégrés dans et/ou portés par ledit dispositif mobile (2), éventuellement ledit système de communication de données (51) étant en outre intégré dans ledit dispositif mobile (2), ou

- apte à être associé à un dispositif mobile (2) pour couper l'herbe, ledit dispositif de surveillance étant installé avec des raccords (62) audit dispositif mobile (2), lesdits raccords (62) comprenant éventuellement des crochets magnétiques et/ou mécaniques.

9. Système de surveillance (100) selon l'une quelconque des revendications précédentes, comprenant en outre un dispositif distant (20), en particulier un ordinateur, un smartphone, une tablette ou un serveur distant tel qu'un service dans le nuage (23), comprenant au moins un dispositif de commande distant (50b), en particulier appartenant à ladite unité de commande (50), et au moins un système de communication (51) correspondant conçu pour recevoir, depuis le système de communication (51) du dispositif de surveillance (60), au moins l'un du paramètre spectral, de l'indice spectral, des informations de position et de la description,

le dispositif distant (20) comprenant ledit second détecteur (5) de position conçu pour détecter, par exemple sous un état fonctionnel du dispositif de surveillance, lesdites informations de position, le dispositif de commande distant (50b) du dispositif distant (20) étant conçu pour associer lesdites informations de position audit au moins un indice spectral pour définir lesdites informations de statut ;

le système de communication (51) du dispositif de surveillance (60) ou du dispositif distant (20) étant du type à radiofréquence, en particulier selon le protocole Bluetooth ;

et le dispositif distant (20) comprenant une interface graphique (21) conçue pour afficher ladite carte virtuelle (10) comprenant ladite pluralité de portions (11), ladite interface graphique (21) étant en particulier un écran.

10. Système de surveillance (100) selon la revendication 9, ledit système de surveillance (100) étant conçu selon une première configuration, le système de communication (51) du dispositif distant (20) étant conçu pour recevoir ledit au moins un paramètre spectral transmis par le système de communication (51) du dispositif de surveillance (60), le dispositif de commande distant (50b) du dispositif distant (20) étant conçu pour obtenir l'indice spectral respectif et éventuellement la description respective.

11. Système de surveillance (100) selon la revendication 9, ledit système de surveillance (100) étant conçu selon une seconde configuration, le système de communication (51) du dispositif distant (20) étant conçu pour recevoir ledit indice spectral transmis par le système de communication (51) du dispositif de surveillance (60), le dispositif de commande distant (50b) du dispositif distant (20) étant conçu pour recevoir ledit indice spectral, le dispositif de commande distant (50b) du dispositif distant (20) étant éventuellement conçu pour obtenir la description respective.

12. Système de surveillance (100) selon la revendication 9, ledit système de surveillance (100) étant conçu selon une troisième configuration, le système de communication (51) du dispositif distant (20) étant conçu pour recevoir ladite description transmise par le système de communication (51) du dispositif de surveillance (60), le dispositif de commande distant (50b) du dispositif distant (20) étant conçu pour recevoir ladite description.

13. Système de surveillance (100) selon l'une quelconque des revendications 9 à 12, le dispositif distant (20), au moins sous un état fonctionnel dudit dispositif de surveillance (60), étant conçu pour être exécuté par un opérateur, sous cet état fonctionnel étant assumé que la position du dispositif de surveillance (60) coïncide avec la position dudit dispositif distant (20), en particulier étant assumé que la position du premier détecteur (3) du dispositif de surveillance (60) coïncide avec la position dudit dispositif distant (20).

14. Système de surveillance (100) selon l'une quelconque des revendications précédentes, l'unité de commande (50) étant conçue pour prédire, comme une fonction de l'indice spectral associé à une zone de surveillance de la zone de travail (1), le taux de croissance de la végétation dans cette zone de surveillance ;

le système de surveillance comprenant en outre au moins l'un d'un capteur d'humidité conçu pour détecter le degré d'humidité du sol, d'un capteur de température, et d'un capteur de luminosité, un ou plusieurs de ces capteurs étant connectés à l'unité de commande (50), éventuellement le premier détecteur (3) étant conçu pour détecter également au moins l'un du degré d'humidité du sol, de la température et de la luminosité,

au moins l'un desdits capteurs d'humidité, de température et de luminosité étant installé à l'intérieur de la zone de travail (1), ladite unité de commande (50) étant conçue pour recevoir les signaux correspondants desdits capteurs et comparer lesdits signaux correspondants afin de détecter de quelconques anomalies.

**15.** Système de surveillance (100) selon l'une quelconque des revendications précédentes, ledit au moins un paramètre spectral comprenant au moins une information de fréquence détectée par le premier détecteur (3) en correspondance de la au moins une desdites zones de surveillance, lesdites informations de fréquence comprenant au moins l'une :

> - d'une ou plusieurs valeurs de fréquence liées à un signal lumineux détecté par le premier détecteur (3) en correspondance d'au moins l'une desdites zones de surveillance ; et
> - au moins une intensité associée à au moins l'une desdites une ou plusieurs valeurs de fréquence,

ledit au moins un paramètre spectral comprenant au moins une mesure de réflectance spectrale d'un signal lumineux obtenu du premier détecteur (3) en correspondance d'au moins l'une desdites zones de surveillance, ladite au moins une mesure de réflectance spectrale étant liée au champ des fréquences correspondant à l'infrarouge et au proche infrarouge.

FIG.1

FIG.2

FIG.2a

FIG.3

FIG.4

FIG.4a

FIG.5

EP 3 837 944 B1

FIG.6

FIG.7

FIG.8

**EP 3 837 944 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6845326 B1
- WO 2007050192 A2